# EUROPEAN PATENT SPECIFICATION

(11) **EP 3 690 103 B1**
(45) Date of publication and mention of the grant of the patent: **15.12.2021**
(21) Application number: 20152207.5
(22) Date of filing: 16.01.2020
(51) Int. Cl.: D06F 34/16, D06F 33/48, D06F 103/26, D06F 105/52

(54) **WASHING MACHINE AND METHOD FOR CONTROLLING THE SAME**
WASCHMASCHINE UND VERFAHREN ZUR STEUERUNG DAVON
MACHINE À LAVER ET SON PROCÉDÉ DE COMMANDE

(30) Priority: 01.02.2019 KR 20190014059
(43) Date of publication of application: 05.08.2020
(73) Proprietor: LG Electronics Inc., SEOUL, 07336 (KR)
(72) Inventor: KANG, Dongsoo, 08592 Seoul (KR); PARK, Jinyoung, 08592 Seoul (KR); SEO, Hyunseok, 08592 Seoul (KR); CHOI, Byungkeol, 08592 Seoul (KR); HWANG, Sungmok, 08592 Seoul (KR)
(74) Representative: Ter Meer Steinmeister & Partner

(56) References cited:
- KR-B1- 101 841 248
- US-A1- 2015 252 509
- US-A1- 2019 382 935

## Description

### BACKGROUND

### 1. Technical Field

The present disclosure relates to a washing machine and a method for controlling the washing machine, and more particularly, a washing machine capable of early predicting excessive vibration expected to be generated in a dewatering process based on machine learning, and a method for controlling the washing machine.

### 2. Description of the Related Art

Generally, a washing machine is a device to remove dirt from laundry (hereinafter also referred to as "fabric") such as clothing, bedding, etc. by using chemical cleaning action of water and a detergent, and physical action such as friction between water and the laundry.

A washing machine is classified into an agitator type, a pulsator type, and a drum type. The drum type washing machine includes a water storage tank (or tub) for storing water and a washing tub (or drum) rotatably disposed in the water storage tank to accommodate laundry therein.

The washing tub (or drum) is formed with a plurality of through holes through which water passes. A washing operation is generally divided into a washing stroke (cycle), a rinsing stroke (cycle) and a dewatering stroke (cycle). A process of each stroke may be displayed through a control panel (or display) provided outside a washing machine.

The washing stroke is to remove dirt from laundry using friction between water stored in the water storage tank and the laundry placed in the washing tub, and chemical cleaning action of a detergent in water.

The rinsing stroke is to rinse the laundry with clean water to remove the detergent soaked (adhered) from it during the washing stroke by supplying clean water (no detergent dissolved) into the water storage tank. A fabric softening agent may be supplied together with the water during the rinsing stroke.

The dewatering stroke is to remove water from the laundry by rotating the washing tub at high speed after the rinsing stroke is finished. Normally, an entire washing operation of the washing machine is finished with an end of the dewatering stroke. However, in the case of a combo washer dryer, a drying stroke may be further added after the dewatering stroke.

Normally, the washing operation is set to operate under a different condition depending on a load or amount of laundry (hereinafter also referred to as "amount of fabrics") placed in the washing tub. For example, a water level, washing strength, a drain time, a dewatering time, etc., may vary according to the amount of laundry.

In the washing operation, washing is performed as laundry is dropped by the force of gravity while the drum rotates with respect to a forward-backward direction when viewed from the front of the washing machine.

In a dewatering operation after finishing the washing and rising, the drum is accelerated to a high rotational speed. Then, by a centrifugal force, water from the laundry adhered to the drum is discharged to the tub through dewatering holes on a surface of the drum.

In the process of dewatering, when the load of laundry in the drum is unevenly distributed, unbalance (hereinafter, "UB") occurs, which causes a drive unit (a tub that includes a drum) to vibrate due to gravity. This vibration is transferred to the tub, a cabinet and the floor, and causes noise. In addition, a load required to rotate the drum is increased.

Accordingly, as for the washing machine, reducing vibration of the drum is very important in terms of product stability or customer satisfaction.

In the related art, in order to reduce vibration of a drive unit, a balancing unit (ball balancer, liquid balancer), or the like is used to proactively reduce UB itself. This is to increase weight of the drive unit itself as a way of being less affected by UB. In addition, a technology for reducing vibration of the drive unit using a friction damper and a spring having a damping force has been developed.

Meanwhile, a related art Document 1 (Patent Application No. 10-0244874, published on November 24, 1999) discloses a configuration for predicting vibration expected to occur so as to remove unbalance in a washing machine. In the related art Document 1, transient vibration is predicted by reading a voltage waveform output from a gyro sensor, and calculating a surface integral of the voltage waveform to determine unbalance of laundry, and then comparing the determined unbalance with a reference value, which is a criterion for determining an occurrence of transient vibration.

However, in the related art Document 1, an amount of eccentricity (UB value) is simply compared with a reference value (reference UB value) of generated transient vibration to only predict whether or not transient vibration will occur based on the compared amount of eccentricity (UB value).

In other words, in the related art Document 1, the amount of eccentricity rather than a vibration value is used for predicting transient vibration, and a predicted value of transient vibration (i.e., a maximum transient vibration value) is not accurately calculated. Accordingly, prediction accuracy for occurrence of transient vibration is not reliable enough.

If the transient vibration is not accurately predicted, an unnecessary stop (or initialization) of the dewatering process occurs, leading to an increase in a dewatering time.

A related art Document 2 (Patent Application No. 10-1272341, published on May 30, 2013) discloses a configuration for measuring RPM fluctuations (UB value) and an actual amount of vibration generated in a washing machine. If the detected amount of vibration is greater than a reference vibration amount, or the detected RPM fluctuations are greater than reference RPM fluctuations, rotation of a motor is stopped to perform a process of evenly distributing laundry again.

However, in the related art Document 2, an amount of vibration actually generated is only compared with a reference vibration amount. This fails to predict (calculate) a vibration value of transient vibration expected to be generated (i.e., the maximum transient vibration value) by using the amount of vibration actually generated.

In the related art Document 2, a configuration for accurately predicting (calculating) a transient vibration value is not disclosed, thereby lowering prediction accuracy for occurrence of transient vibration. This causes an unnecessary stop (or initialization), and thus, time required for dewatering is increased. Meanwhile, interest in machine learning such as artificial intelligence (AI) and deep learning has greatly increased lately.

The conventional machine learning is focused on statistics-based classification, regression, and cluster models. In particular, in supervised learning of the classification and regression models, the learning models that distinguish new data from characteristics of learning data based on these characteristics are defined by a person in advance. The deep learning, on the other hand, is one in which a computer searches for and identifies characteristics of learning data.

One of the factors that accelerated development of the deep learning is deep learning frameworks provided as an open source. Theano of the University of Montreal, Canada, Torch of New York University, Caffe of the University of California, Berkeley, and TensorFlow of Google are the examples of the deep learning frameworks.

With the release of deep learning frameworks, in addition to deep learning algorithms, extraction and selection of data used for a learning process, a learning method, and learning are becoming more important for effective learning and recognition.

Also, research is being actively conducted for applying AI and machine learning to various products and services.

In addition, development for employing AI and machine learning in a dewatering cycle is being actively carried out to perform the optimized dewatering cycle.

For example, a related art Document 3 (Patent Application No. 10-1841248, published on March 16) discloses a configuration for detecting a load or amount of laundry by inputting a rotational speed of a motor as an input value as an Artificial Neural Network (ANN).

However, in the related art Document 3, a configuration that uses a pre-trained ANN to detect a maximum transient vibration value (or a predicted value of the maximum vibration displacement) expected to be generated in a dewatering process is not provided.
US 2015/0252509 A1 further discloses a method for controlling a washing machine, the method including sensing a degree of vibration while increasing a rotation speed of a washing tub. The method further includes, based on the sensed degree of vibration being smaller than an allowable degree of vibration, dehydrating laundry by draining wash water from the washing tub and rotating the washing tub at an increased rotation speed.

### DISCLOSURE

### TECHNICAL PROBLEM

The present disclosure has been made to solve those problems of the related art. An object of the present disclosure is to provide a washing machine capable of decreasing time required for dewatering by accurately predicting an occurrence of excessive vibration, and a method for controlling the washing machine.

Another object of the present disclosure is to provide a washing machine capable of accurately detecting unbalance (UB) that causes excessive vibration in a dewatering process, and a method for controlling the washing machine.

Still another object of the present disclosure is to provide a washing machine capable of predicting an occurrence of excessive vibration in a dewatering process at an early stage of the dewatering process using an Artificial Neural Network (ANN), and a method for controlling the washing machine.

Still another object of the present disclosure is to provide a washing machine capable of preventing a dewatering time from being prolonged due to unnecessary initialization of a de-watering process by accurately determining whether to initialize the dewatering process before excessive vibration occurs, and a method for controlling the washing machine.

Still another object of the present disclosure is to provide a washing machine capable of directly calculating a predicted value of the maximum vibration displacement to be generated in a dewatering process using a vibration value measured by a vibration sensor and accurately de-termining an occurrence of excessive vibration based on the predicted value of the maximum vibration displacement, and a method for controlling the washing machine.

The objects to be solved in the present disclosure may not be limited to the afore-mentioned, and other problems to be solved by the present disclosure will be obviously understood by a person skilled in the art based on the following description. One or more of these objects are solved by the subject-matter of the independent claims. Further advantageous embodiments and refinements are described in the respective dependent claims.

Embodiments disclosed herein provide a washing machine that may include a controller configured to measure a value regarding multi-axis vibration with a vibration sensor at a detection section in which a drum rotates at a specific rotational speed (i.e., a low RPM section) so as to reduce time required for dewatering, determine a predicted value of maximum vibration displacement expected to be generated in an entire dewatering process (or resonance section (or transient section)) based on the measured value, and determine to restart or initialize the dewatering process at the detection section (low RPM section) when the predicted value of the maximum vibration displacement exceeds a predetermined reference value.

Embodiments disclosed herein also provide a washing machine that may include a controller capable of accurately detecting a predicted value of maximum vibration displacement expected to be generated in an entire dewatering process (or resonance section (or transient section) of 150 to 600 RPM) by inputting a value regarding multi-axis vibration into an Artificial Neural Network (ANN) pre-trained or learned through machine learning as an input value to accurately determine whether to restart or initialize the dewatering process.

Embodiments disclosed herein may further provide a washing machine that may include a tub, a vibration sensor provided at the tub, a drum accommodating laundry therein and provided to be rotatable in the tub, and a controller configured to measure a value regarding multi-axis vibration occurring in the tub and/or regarding multi-axis vibration of the tub and/or regarding multi-axis vibration of a drive unit including the tub and the drum with the vibration sensor at a detection section, i.e. during a detection section or detection step, in which the drum rotates at a specific rotational speed during a dewatering process, determine a predicted value of maximum vibration displacement expected to be generated in the tub based on the measured value, and determine whether to restart or initialize the dewatering process at the detection section based on the determined predicted value of the maximum vibration displacement and a predetermined reference value. The controller may be configured to perform a method of controlling the washing machine according to any embodiment described in this disclosure. Restarting or initializing the dewatering process may include rotating the drum at a rotational speed lower than a rotational speed, at which laundry is attached to a wall surface or inner circumferential surface of the drum. By these means, the laundry may be re-distributed before starting the dewatering process again.

Here, a detection section may denote a detection step or detection period. A vibration displacement may denote a displacement of the drum or of the drive unit from a position of the drum or of the drive unit at rest or when rotating without vibration. Likewise, the maximum vibration displacement may denote the maximum displacement caused by the multi-axis vibration of the drum or of the drive unit.

Preferably, the vibration sensor includes an acceleration sensor. Preferably, the tub is supported in or suspended in the cabinet, i.e. not rigidly fixed to the cabinet. The tub may perform vibrations with respect to the cabinet due to rotation of the drum.

The vibration sensor may measure a plurality of vibration displacement values for a plurality of vibrations occurring along a plurality of different axes with respect to the tub. The measuring of a value of multi-axis vibration may include at least measuring of a plurality of vibration displacement values for a vibration along a first axis and measuring of a plurality of vibration displacement values for a vibration along a second axis. The measuring of a value of multi-axis vibration may further include measuring of a plurality of vibration displacement values for a vibration along further axes, respectively. The axes may include at least three orthogonal axes at a first point of the tub and at least three orthogonal axes at a second point the tub.

The controller may calculate information of a plurality of phase differences between the plurality of vibrations.

The information of the plurality of phase differences may include information regarding phase differences between any one of the plurality of vibrations and the remaining vibrations.

The controller may output the predicted value of the maximum vibration displacement as an output value by inputting at least one of the plurality of vibration displacement values, the information of the plurality of phase differences, and a rotational speed variation value as an input value of a pre-trained Artificial Neural Network (ANN).

The predicted value of the maximum vibration displacement may include a plurality of predicted values of maximum vibration displacement expected to be generated in each of a plurality of different axes.

The controller may rotate the drum faster than a specific rotational speed of the detection section, when all of the plurality of predicted values of the maximum vibration displacement are equal to or less than the predetermined reference value.

The controller may stop rotation of the drum at the detection section, when at least one of the plurality of predicted values of the maximum vibration displacement exceeds the predetermined reference value.

The predetermined reference value may be set according to each of a plurality of different axes.

The specific rotational speed may be faster than a speed of the drum rotating while the laundry is attached to a wall surface of the drum, and slower than a maximum rotational speed of the dewatering process.

Further embodiments disclosed herein also provide a method for controlling a washing machine that may include measuring a value regarding multi-axis vibration occurring in a tub that includes a drum with a vibration sensor at a detection section, i.e. during a detection section or detection step, in which the drum rotates at a specific rotational speed during a dewatering process, determining a predicted value of maximum vibration displacement expected to be generated in the tub based on the measured value, and determining whether to restart or initialize the dewatering process at the detection section based on the determined predicted value of the maximum vibration displacement and a predetermined reference value. Here, detection section may denote a detection step or detection period. Restarting or initializing the dewatering process may include rotating the drum at a rotational speed lower than a rotational speed, at which laundry is attached to a wall surface or inner circumferential surface of the drum. By these means, the laundry may be re-distributed before starting the dewatering process again. The washing machine to be controlled by the method may be a washing machine according to any one of the herein described embodiments.

The vibration sensor may measure a plurality of vibration displacement values for a plurality of vibrations occurring along a plurality of different axes with respect to the tub. The measuring of a value of multi-axis vibration may include at least measuring of a plurality of vibration displacement values for a vibration along a first axis and measuring of a plurality of vibration displacement values for a vibration along a second axis. The measuring of a value of multi-axis vibration may further include measuring of a plurality of vibration displacement values for a vibration along further axes, respectively. The axes may include at least three orthogonal axes at a first point of the tub and at least three orthogonal axes at a second point the tub.

The measuring may be configured to calculate information of a plurality of phase differences between the plurality of vibrations.

The information of the plurality of phase differences may include information regarding phase differences between any one of the plurality of vibrations and the remaining vibrations.

The determining may be configured to output the predicted value of the maximum vibration displacement as an output value by inputting at least one of the plurality of vibration displacement values, the information of the plurality of phase differences, and a rotational speed variation value as an input value of a pre-trained Artificial Neural Network (ANN).

The predicted value of the maximum vibration displacement may include a plurality of predicted values of a maximum vibration expected to be generated in each of a plurality of different axes of different axes.

Rotating the drum faster than a specific rotational speed at the detection section may be further included, when all of the plurality of predicted values of the maximum vibration displacement are equal to or less than the predetermined reference value.

The determining whether to restart or initialize the dewatering process may be configured such that the dewatering process is restarted or initialized by stopping rotation of the drum at the detection section when at least one of the plurality of predicted values of the maximum vibration displacement exceeds the predetermined reference value.

The predetermined reference value may be set according to each of a plurality of different axes.

The specific rotational speed may be faster than a speed of the drum rotating while the laundry is attached to a wall surface of the drum, and slower than a maximum rotational speed of the dewatering process.

The predetermined reference value may be set based on a gap between the tub and a cabinet of the washing machine.

Details of other embodiments are included in the detailed description and accompanying drawings.

According to embodiments of the present disclosure, one or more of the following effects can be provided.

First, the maximum vibration displacement of a tub expected to be generated during a dewatering process is predicted at a detection section, thereby determining whether to restart or initialize the dewatering process or continue the dewatering process at the beginning (or at an early stage) of dewatering.

Second, unbalance (UB) that causes excessive vibration to occur may be detected at the beginning of the dewatering process. Accordingly, the dewatering process may be restarted or initialized early, thereby reducing time required for dewatering.

Third, if a predicted value of the maximum vibration displacement calculated through an ANN exceeds a predetermined reference value, it may be determined to restart or initialize (stop or terminate) the dewatering process without continuing it further, thereby preventing excessive vibration from occurring, and reducing time taken to enter the dewatering process.

The effects of the present disclosure are not limited to those described above, and other effects not mentioned may be clearly understood by those skilled in the art from the description of the appended claims.

### BRIEF DESCRIPTION OF THE DRAWINGS

FIG. 1 is a lateral cross-sectional view of a washing machine according to an embodiment.
FIG. 2 is a block diagram illustrating a control relationship between main components of the washing machine of FIG 1.
FIG. 3 is a view illustrating a process of a dewatering cycle.
FIG. 4 is a conceptual view illustrating rotational speed fluctuations and 3D UB according to an embodiment.
FIG. 5 is a flowchart illustrating a representative control method according to the present disclosure.
FIGS. 6, 7, 8, and 9 are conceptual views illustrating the control method in FIG. 5.
FIGS. 10 and 11 are result data of experiments employing a control method according to an embodiment.

### DETAILED DESCRIPTION OF THE DISCLOSURE

Hereinafter, the embodiments disclosed herein will be described in detail with reference to the accompanying drawings, and the same or similar elements are designated with the same numeral references regardless of the numerals in the drawings and their redundant description will be omitted. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known technology or construction is considered to unnecessarily divert the gist of the present disclosure, such explanation has been omitted but would be understood by those skilled in the art. Also, it should be understood that the accompanying drawings are merely illustrated to easily explain the concept of the disclosure, and therefore, they should not be construed to limit the technological concept disclosed herein by the accompanying drawings, and the concept of the present disclosure should be construed as being extended to all modifications, and substitutes included in the concept and technological scope of the disclosure.

Though the terms including an ordinal number such as first, second, etc. may be used herein to describe various elements, the elements should not be limited by those terms. The terms are used merely for the purpose to distinguish an element from another element.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

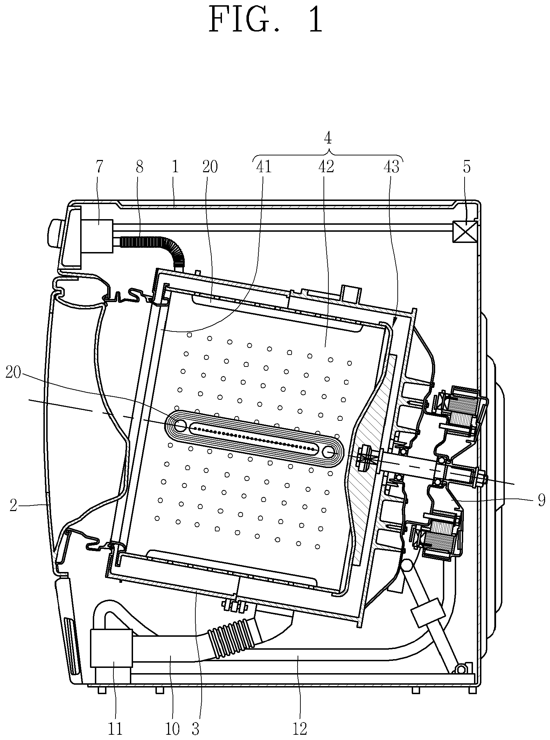

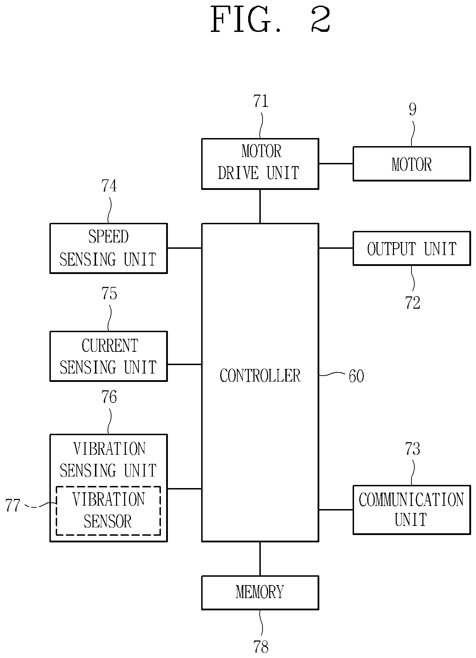

FIG. 1 is a lateral cross-sectional view of a washing machine according to an embodiment, and FIG. 2 is a block diagram illustrating a control relationship between main components of the washing machine of FIG 1.

Referring to FIG. 1, a washing machine according to this embodiment may include a casing 1 forming an outer appearance, a water storage tank (or tub) 3 disposed in the casing 1 and configured to store wash water therein, a washing tub 4 (or drum) rotatably disposed in the water storage tank 3 into which laundry is introduced, and a motor 9 configured to rotate the washing tub 4.

The washing tub 4 may be provided with a front cover 41 having an opening for putting in and taking out of laundry, a cylindrical drum 42 substantially horizontally disposed so that a front end thereof is coupled to the front cover 41, and a rear cover 43 coupled to a rear end of the drum 42. A rotating shaft of the motor 9 may be connected to the rear cover 43 by passing through a rear wall of the water storage tank 3. A plurality of through holes may be formed in the drum 42 so that water is exchanged between the washing tub 4 and the water storage tank 3.

A lifter 20 may be provided be on an inner circumferential surface of the drum 42. The lifter 20 protruding from the inner circumferential surface of the drum 42 may extend long to a length direction (a forward-backward direction) of the drum 42, and a plurality of the lifters 20 may be disposed to be spaced apart from each other in a circumferential direction. Laundry may be lifted up by the lifter 20 when the washing tub 4 is rotated.

It is not limited to this, but a preferable height of the lifter 20 protruding from the drum 42 may be 30 mm or less (or 6.0% of a drum diameter), and more preferably 10 to 20 mm. Particularly, when the height of the lifter 20 is 20 mm or less, even if the washing tub 4 is continuously rotated in one direction at approximately 80 rpm, laundry may be moved without being attached to the washing tub 4. That is, when the washing tub 4 rotates in one direction more than once, the laundry located at the lowermost position in the washing tub 4 may be lifted up to a predetermined height by the rotation of the washing tub 4 and then dropped while being separated from the washing tub 4.

The washing tub 4 is rotated centered on a horizontal axis. Here, the term "horizontal" does not mean geometric horizontal in the strict sense, but it is close to horizontal rather than vertical even when it is inclined at a predetermined angle with respect to the horizontal axis as shown in FIG. 1. Thus, it is assumed that the washing tub rotates with respect to the horizontal axis.

A laundry inlet may be formed at a front surface of the casing 1, and a door 2 for opening and closing the laundry inlet may be rotatably provided at the casing 1. A water inlet valve 5, a water inlet pipe 6, and a water inlet hose 8 may be installed in the casing 1. When the water inlet valve 5 is opened for supplying water, wash water having passed through the water inlet pipe 6 may be mixed with a detergent in a dispenser 7, and then introduced into the water storage tank 3 through the water inlet hose 8.

An input port of a pump 11 may be connected to the water storage tank 3 through a drain hose 10, and an outlet port of the pump 11 may be connected to a drain pipe 12. The water discharged from the water storage tank 3 through the drain hose 10 is fed by the pump 11 to flow along the drain pipe 12, and is then discharged to the outside of the washing machine.

Referring to FIG. 2, the washing machine according to one embodiment of the present disclosure may include a controller 60 configured to control an entire operation of the washing machine, a motor drive unit 71 controlled by the controller 60, an output unit 72, a communication unit 73, a speed sensing unit 74, a current sensing unit 75, a vibration sensing unit 76, and a memory 78.

The controller 60 may control a series of washing processes of washing, rinsing, dewatering, and drying. The controller 60 may perform a washing cycle, a rinsing cycle, a dewatering cycle, and a drying cycle according to a preset algorithm. The controller 60 may also control the motor drive unit 71 according to the algorithm.

The motor drive unit 71 may control driving of the motor 9 in response to a control signal applied by the controller 60. The control signal may be a signal for controlling a target speed of the motor 9, an acceleration tilt (or acceleration), a driving time, and the like.

The motor drive unit 71 is for powering the motor 9, which may include an inverter (not shown) and an inverter controller (not shown). In addition, the motor drive unit 71 may be a concept that further includes a converter or the like used for supplying direct current (DC) power to the inverter.

For example, when the inverter controller (not shown) outputs a switching control signal of a Pulse Width Modulation (PWM) based method to the inverter (not shown), then the inverter (not shown) performs high switching so as to supply alternating current (AC) power of a predetermined frequency to the motor 9.

In this specification, controlling the motor 9 in a specific manner by the controller 60 may mean that the controller 60 applies a control signal to the motor drive unit 71 so that the motor drive unit 71 controls the motor 9 in the specific manner based on the control signal. Here, the specific manner may include various embodiments described herein.

The speed sensing unit 74 may detect a rotational speed of the washing tub 4. The speed sensing unit 74 may detect a rotational speed of a rotor of the motor 9. When a planetary gear train that rotates the washing tub 4 by changing a revolution ratio of the motor 9 is provided, the rotational speed of the washing tub 4 may be a value converted to the rotational speed of the rotor sensed by the speed sensing unit 74 in consideration of a deceleration or acceleration ratio of the planetary gear train.

The controller 60 may control the motor drive unit 71 such that the motor 9 follows a preset target speed by using feedback on a rotational speed of the washing tub 4 received from the speed sensing unit 74. In other words, the controller 60 may control the motor 9 such that the rotational speed of the washing tub 4 reaches the target speed.

The current sensing unit 75 may detect an electric current applied to the motor 9 (or an output current flowing in the motor 9) to transmit the sensed current to the controller 60. The controller 60 may detect a load (or amount) of laundry and a kind of fabric (or laundry item) using the received current.

Here, values of the electric current include values obtained during a process in which the washing tub 4 is accelerated toward the target speed (or a process in which the motor 9 is accelerated toward the preset target speed).

When rotation of the motor 9 is controlled by vector control based on a torque current and a magnetic flux current, the current may be a torque axis (q-axis) component flowing in a motor circuit, namely, a torque current (Iq).

The vibration sensing unit 76 may detect vibration in the water storage tank 3 (or washing machine) generated by rotation of the washing tub 4 in which laundry is accommodated.

The washing machine according to one embodiment of the present disclosure may include a vibration sensor (or a vibration measurement sensor) 77. The vibration sensor 77 may be provided at one point of the washing machine, e.g., at one point of the water storage tank 3. The vibration sensor 77 may be included in the vibration sensing unit 76.

The vibration sensing unit 76 may receive a vibration value (or a vibration displacement value) measured by the vibration sensor 77, and transmit the vibration value to the controller 60. The vibration sensing unit 76 may also calculate a vibration value (or vibration displacement value) of the water storage tank 3 (or washing machine) using a vibration signal measured by the vibration sensor 77.

The speed sensing unit 74, the current sensing unit 75, and the vibration sensing unit 76 provided in the washing machine according to one embodiment of the present disclosure may also be referred to as a 'sensing unit', and be understood as a concept included in the sensing unit.

In addition, the sensing unit may calculate a rotational speed value (or speed value) of the washing tub 4 measured by the speed sensing unit 74, an electric current value applied to the motor 9, which is measured by the current sensing unit 75, and a vibration value of the water storage tank 3 measured by the vibration sensing unit 76.

Meanwhile, the washing machine according to the present disclosure may further include a UB sensing unit (not shown). The UB sensing unit may sense an amount of eccentricity (amount of shaking) of the washing tub 4, that is, unbalance (UB) of the washing tub 4. The UB sensing unit may calculate a UB value that numerically represents shaking of the washing tub 4.

The controller 60 may calculate Rotational Revolution per Minute (RPM) of the washing tub 4 as the UB value.

For example, the controller 60 may calculate a displacement value between the maximum speed and the minimum speed as a rotational speed variation (or shaking) value, based on a waveform value of a rotational speed of the washing tank 4 measured by the speed sensing unit 74.

The UB value may be the calculated rotational speed variation value itself, or may be a specific value output by using the calculated rotational speed variation value.

The controller 60 may measure unbalance (UB) of the washing tub 4 generated when the washing tub 4 accommodating laundry therein rotates. Here, unbalance of the washing tub 4 may mean shaking of the washing tub 4 or a shaking value (or a degree of shaking) of the washing tub 4. In addition, the unbalance of the washing tank 4 may mean uneven distribution of weight of the laundry in the washing tank 4.

The controller 60 may measure (calculate) a shaking value (or degree of shaking) of the washing tub 4 (or drum). Here, the shaking value of the washing tub 4 may be referred to as a UB value, an amount of UB, an unbalance value, an amount of unbalance, or an amount of eccentricity.

In this specification, unbalance (UB) may mean the amount of eccentricity of the washing tub 4, that is, unbalance of the washing tub 4 or shaking of the washing tub 4.

The UB value that represents an intensity (or a degree) of shaking of the washing tub 4 may be output (calculated) based on an amount of rotational speed variations of the washing tub 4 (or motor 9), or an amount of acceleration variations of the washing tub 4 (or the motor 9).

For example, the controller 60 may calculate the UB value by receiving the rotational speed of the washing tub 4 (or motor 9) measured by the speed sensing unit 74 and using the amount of variations in the received rotational speed value. Here, the amount of rotational speed variations may mean, for example, a difference in rotational speeds measured at predetermined time intervals, a difference in rotational speeds measured at each time when the washing tub 4 is rotated by a predetermined angle, or a difference between the maximum rotational speed and the minimum rotational speed. That is, the UB value described herein may mean a rotational speed variation value (or RPM fluctuations).

For example, the controller 60 may measure the rotational speed of the washing tub 4, measured by the speed sensing unit 74, at each predetermined angle to calculate acceleration through a difference in the measured rotational speeds. Thereafter, the controller 60 (or UB sensing unit (not shown)) may calculate the UB value by using a value obtained by subtracting the minimum acceleration from the maximum acceleration in the measured rotational speed values.

Meanwhile, in the drawing, the speed sensing unit 74, the current sensing unit 75, the vibration sensing unit 76, and the UB sensing unit (not shown) are separately provided from the controller 60, but the present disclosure is not limited thereto.

At least one of the speed sensing unit 74, the current sensing unit 75, the vibration sensing unit 76, and the UB sensing unit may be provided in the controller 60. In this case, functions, operation, and control methods performed by the speed sensing unit 74, the current sensing unit 75, and the vibration sensing unit 76, and the UB sensing unit may be performed by the controller 60.

When the vibration sensing unit 76 is included in the controller 60 or is performed under the control of controller 60, it may be understood that the vibration sensor 77 is not included in the vibration sensing unit 76, but is separately provided at one point of the washing machine. Here, the one point of the washing machine may be a point of an outer surface of the water storage tank 3.

The output unit 72 may output various information related to a washing machine. For example, the output unit 72 may output an operating state of the washing machine. The output unit 72 may be an image output device that outputs a visual display such as an LCD or LED, or an acoustic output device that outputs sound such as a buzzer. The output unit 72, controlled by the controller 60, may output information of the amount of laundry or the kind of fabric (laundry item).

A programmed ANN, an electric current pattern according to the amount of laundry and/or the kind of fabric, a database (DB) constructed by machine learning based on the electric current pattern, a machine learning algorithm, current values detected by the current sensing unit 75, average values of the detected current values, values obtained by processing the average values according to a parsing rule, and data transmitted and received through the communication unit 73, and the like may be saved in the memory 78.

In addition, data such as all sorts of control data for controlling the entire operation of the washing machine, data of washing settings input by a user, data of wash time calculated according to the washing settings, data of wash courses, data for determining a washing machine error, and the like may be saved in the memory 78.

The communication unit 73 may communicate with a server connected to a network. The communication unit 73 may include at least one communication module such as an Internet module, a mobile communication module, etc. The communication unit 73 may receive various types of data such as learning data and algorithm updates from the server.

The controller 60 may update the memory 78 by processing various types of data received from the communication unit 73. For example, in case data input through the communication unit 73 is related to an update of an operation program prestored in the memory 78, the controller 60 may update the memory 78 using update data. When the input data is about a new operation program, the controller 60 may additionally store the new operation program in the memory 78.

Machine learning means that a computer learns from data and solves a problem without being explicitly instructed logic by a person.

Deep learning, an artificial intelligence (AI) technology, is based on an ANN for constructing AI so that a computer thinks and learns like people without having to teach it. The ANN may be implemented in the form of software or hardware such as a chip.

For example, the controller 60, based on the machine learning, may figure out properties of laundry (fabric) (hereinafter, referred to as "properties of fabric") introduced into the washing tub 4 by processing electric current values sensed by the current sensing unit 75. These properties of fabric may include the amount of the laundry, and the kind (or type) of fabric.

In addition, the controller 60 may determine (predict, estimate, calculate) various information related to unbalance of the washing tub 4 according to the present disclosure using the ANN learned through machine learning. For example, the controller 60 may calculate a predicted value of the maximum vibration displacement expected to be generated in a dewatering process.

In case laundry is placed to be concentrated in one side of the washing tub 4 or laundry is severely tangled, unbalance occurs (i.e., unbalance becomes severe), causing the washing tub 4 to shake or vibrate a lot while rotating.

As shaking of the washing tub 4 becomes severe (as the UB value of the washing tub 4 becomes larger), a large current load is applied to the motor 9 for rotating the washing tub 4 at high speed, thereby consuming more energy and causing noise.

In contrast, when laundry is evenly distributed in the washing tub 4 or laundry is slightly tangled, unbalance is reduced. Accordingly, even if the washing tub 4 is rotated at high speed, shaking (vibration value) of the washing tub 4 is reduced, and the UB value becomes smaller accordingly.

Hereinafter, a method for minimizing unbalance (UB) caused by laundry will be described in detail.

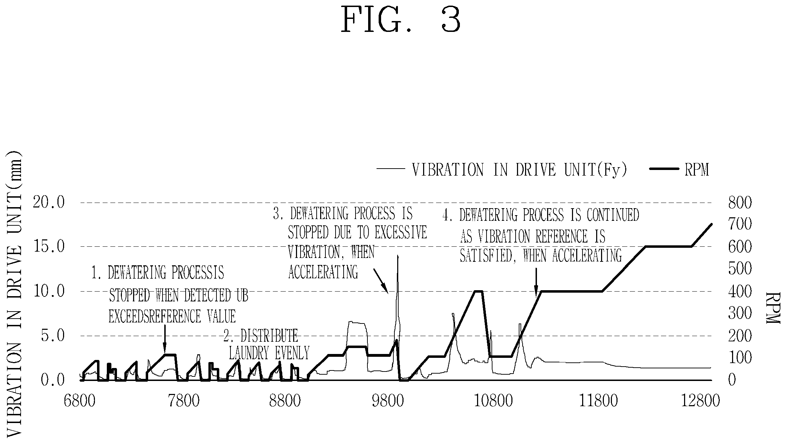

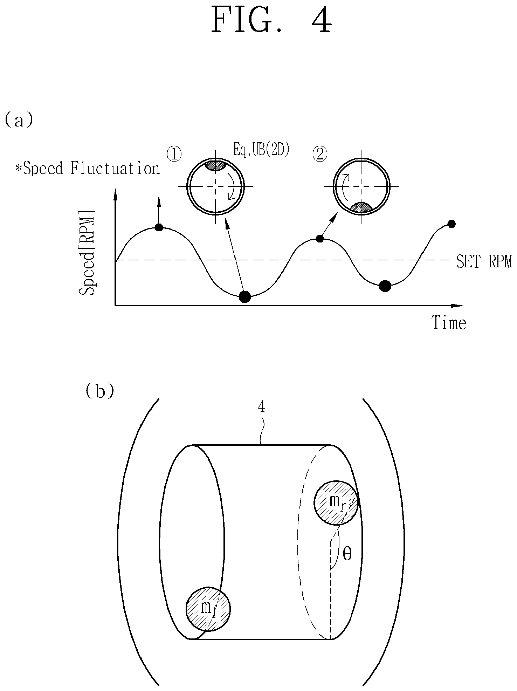

FIG. 3 is a view illustrating a process of a dewatering cycle, and FIG. 4 is a conceptual view illustrating rotational speed fluctuations and 3D UB according to an embodiment.

The washing machine according to this embodiment may perform a dewatering cycle (or stroke) by using a dewatering driving algorithm, so as to minimize UB caused by laundry (or fabric).

Hereinafter, the water storage tank 3 described above will be referred to as "tub" 3, and the washing tub 4 described above will be referred to as "drum" 4.

In terms of vibrations of a drive unit (a tub that includes a drum) of the washing machine, the maximum vibration displacement amplitude of the drive unit and an occurring point tend to vary according to a load of laundry (an amount of fabrics). Accordingly, the washing machine detects a load of laundry (or an amount of laundry) while the laundry is turned over at a low rotational speed (RPM) (e.g., less than 50 RPM).

The load of laundry may be detected by monitoring an electric current caught in the motor 9.

The controller 60 of the washing machine may accurately predict the load of laundry via deep learning.

Thereafter, a laundry distribution process (or laundry balancing process) is performed to evenly load or distribute laundry in the drum 4 while rotating and decelerating (about 50 RPM or less) the drum 4 (2 of FIG. 3). The controller 60 may monitor a degree (level) of laundry distribution using an electric current in real time. In addition, when the controller 60 detects a predetermined amount of electric current in which laundry is evenly distributed to some extent, it may move onto a UB detection process for detecting unbalance (UB) caused by laundry.

The unbalance (UB) detection may be performed in a state that the centrifugal force is applied to an extent that keeps laundry fixed while the laundry is attached to an inner wall of the drum 4.

Although slightly different depending on a diameter of the drum, or the like, unbalance (UB) is usually generated when laundry is attached to the inner wall of the drum 4 while the drum 4 is rotated at 80 to 90 RPM or more.

Accordingly, the UB detection may performed at 80 to 90 RPM or more. For example, it may be performed at a specific rotational speed (108 RPM) faster than the rotational speed of 80 to 90 RPM.

As such, a section in which unbalance (UB) is detected while rotation of the drum 4 is maintained at the specific rotational speed (108 RPM) will be referred to as 'detection section'.

For the same reason, the laundry distribution process for mixing and evenly distributing laundry (items) may be performed at 80 RPM or less at which the laundry does not adhere to the drum 4.

Meanwhile, in a resonance section of 150 to 600 RPM where the maximum vibration displacement of the drive unit is generated during dewatering, vibration displacement may be rapidly changed due to multi-directionality and nonlinearity of vibration.

Thus, the UB detection should be performed between 80 to 150 RPM at which unbalance (UB) is fixed but vibration displacement variation is not large.

A UB detection technique will be described in detail with reference to FIG. 4.

Through a series of algorithms in a UB detection step (detection section), when a value of vibration displacement due to unbalance (UB) is expected to exceed a reference value if accelerated to a higher RPM, the controller 60 may control a rotational speed of the drum 4 to return to 0 RPM to stop, so as to repeat a series of steps after detecting the load of laundry (1 of FIG. 3).

At this time, the reference value of the vibration displacement value may be determined by taking various or complex matters such as an occurrence of collision between the drive unit and the cabinet, noise, and a rigidity limit of the drive unit into consideration.

When the value of vibration displacement caused by unbalance (UB) is not expected to exceed the reference value, the controller 60 may accelerate the drum 4 to a higher RPM, so as to increase a dewatering rate (or level).

If vibration is greatly generated during acceleration unlike the predicted unbalance (UB), the controller 60 terminates or stops rotation of the drum 4 before excessive vibration exceeding a reference vibration value occurs, so as to restart the dewatering stroke from a step after detecting the load of laundry (3 of FIG. 3).

Stopping the rotation of the drum 4 or returning the rotational speed of the drum 4 to 0 RPM and repeating a series of processes (or steps) after detecting the load of laundry may be referred to as 'initializing the dewatering process' or 'terminating the dewatering process'.

Here, in case a sensor for measuring vibration is provided, the controller 60 may terminate the rotation of the drum 4 when a measured vibration displacement value exceeds a predetermined reference value. In case a sensor is not provided, the controller 60 may monitor an electric current value used for driving the motor to estimate a vibration displacement value, and terminate the rotation of the drum 4 when the predicted vibration displacement value exceeds the predetermined reference value.

When a large amount of different kinds of fabrics are mixed together, changes in unbalance (UB) due to the different kinds of fabrics (or laundry items) occur as a degree of drainage varies depending on a type of fabric.

In order to reflect changes in unbalance (UB) at high RPM, acceleration and deceleration are repeated several times to repeatedly detect unbalance (UB) in a drained state.

When UB detection at 108 RPM is performed repeatedly while accelerating and decelerating RPM to drain water, 1) passing all the UB detection performed several times, 2) entering main dewatering when an actual vibration displacement value does not exceed the predetermined reference value after increasing RPM, and carrying out dewatering at high RPM. As for cases other than 4 of FIG. 3, the dewatering process (or rotation of the drum) is stopped to evenly distribute laundry again.

Ideally, vibration and noise are reduced to the minimum when unbalance (UB) is removed through perfect balancing in the dewatering step. However, if UB detection is excessively performed for this purpose, time required for dewatering (dewatering entry time) will be extended, causing a prolonged time of an entire wash cycle. Therefore, an algorithm is constructed by considering that there is a trade-off between vibration/noise and a dewatering entry time.

A method for UB detection will be described with reference to FIG. 4.

In the dewatering step, unbalance (UB) detection may be performed through changes in a rotational speed generated when a constant amount of electric current is input to the motor to maintain the specific rotational speed (108 RPM).

When laundry is positioned at an upper part or portion of the drum 4 while the drum 4 is rotating (① of FIG. 4), a force generated by a drop of the laundry, as the drum 4 rotates, acts to accelerate RPM of the drum 4 (i.e., causing RPM to increase).

In contrast, when laundry is positioned at a lower part or portion of the drum 4 (② of FIG. 4), gravity applied to the laundry acts in a direction that impedes or suppress rotation of the drum 4, thereby decelerating RPM of the drum 4 (i.e., causing RPM to decrease).

In addition, a range of RPM fluctuations may vary depending on a size of laundry (or a level (or degree) of an unbalanced load of laundry). As such, the range of RPM fluctuations may mean a rotational speed variation (or shaking) value or an RPM variation (or shaking) value, and may also mean a UB value (or a level of UB).

In general, the level of unbalance (UB) determines a magnitude of the maximum vibration displacement that occurs in a transient section (or region). By considering a correlation between the range of RPM fluctuations and the magnitude of the maximum vibration displacement in the transient section, the controller 60 determines whether to stop rotation of the drum 4 or to enter a main dewatering process.

In addition to the RPM fluctuations, the controller 60 may calculate a vibration displacement value using the vibration sensor 77 attached to the tub 3 for directly measuring vibration (or vibration displacement value), and compare the vibration displacement (amplitude) at the detection section (108 RPM) with a specific reference value to determine whether the rotation of the drum 4 is terminated. Here, the specific reference value may be determined using a correlation between a vibration magnitude (level) at the detection section (108 RPM) and the maximum vibration displacement in the transient section.

Meanwhile, in the case of a large load of laundry, unbalance (UB) may not be seen as one, as illustrated in (a) of FIG. 4, the UB is distributed in three dimensions by a depth direction of the drum 4, an angle, etc.

As illustrated in (b) of FIG. 4, in case unbalance (UB) with a specific angle is generated in the front and rear of the drum 4 (diagonal UB, or 3D UB), RPM fluctuations caused by a fabric (or laundry item) m_f, m_r placed on the front and rear of the drum 4, respectively, are offset with each other, when the rotational speed variation value (the range of fluctuations) is observed through the method described in (a) of FIG. 4, thereby generating small RPM fluctuations.

Even when using the vibration sensor, a high-dimensional mode is not generated in the detection section (detection RPM) where the drum 4 is rotated at the specific rotational speed (108 RPM). Accordingly, vibration is linearly increased in the case of a small load of laundry. As for the diagonal UB (3D UB), however, the RPM fluctuations are offset, resulted in a small amount of vibration. Thus, it is difficult to predict vibration expected to be generated at RPM higher than the specific rotational speed (108 RPM) only with vibration displacement measured in the detection section where the drum 4 is rotated at the specific rotational speed (108 RPM).

Meanwhile, in the case of 150 to 600 RPM (transient section) at which the maximum vibration displacement occurs due to resonance of the drum 4, the high-dimensional vibration mode is observed, which is not observed at low RPM.

Due to the complex action of the high-dimensional vibration mode, nonlinear vibration occurs. Accordingly, it is difficult to accurately predict an amount of vibration (vibration displacement value) in the transient section using the conventional method in which complex UB (diagonal UB, 3D UB) of a large load is not properly detected.

If a determination on whether to stop (or terminate) the dewatering process (or rotation of the drum) based on UB detection is made incorrectly, a problem occurs in terms of both vibration and a dewatering entry time.

When the main dewatering process is proceeded due to incorrect detection even if unbalance (UB) is severe, it causes excessive vibration in the transient section, and rotation of the drum 4 to stop. And the dewatering stroke is restarted from the beginning, leading to a delay in the dewatering entry time compared when the dewatering process is stopped at the time of the UB detection.

On the contrary, when the dewatering process is stopped even if unbalance (UB) is small and no excessive vibration occurs, it causes a delay in the dewatering entry time compared to an opportunity to enter the dewatering process.

In order to reduce time required for dewatering, the washing machine according to the present disclosure may calculate (or determine), at the beginning of the dewatering process, a predicted value of the maximum vibration displacement that might be generated during the dewatering process, and determine whether to initialize the dewatering process, or enter the main dewatering process based on the calculated predicted value of the maximum vibration displacement.

Hereinafter, an optimized method for controlling a washing machine will be described. In the method, the maximum vibration displacement expected to be generated in the transient section (predicted maximum vibration displacement that might be generated during the dewatering process) is accurately predicted at the UB section (at the beginning of the dewatering process) where unbalance (UB) is detected at the specific rotational speed, so as to initialize the dewatering process to evenly distribute laundry before excessive vibration occurs or reduce time required for dewatering by entering the main dewatering process quickly if no excessive vibration occurs.

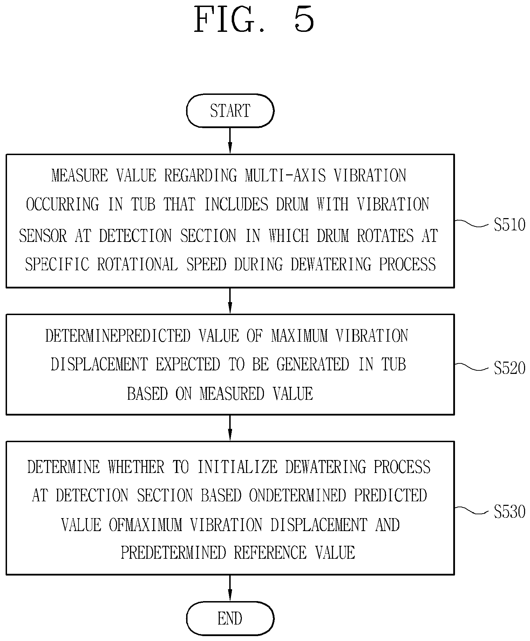

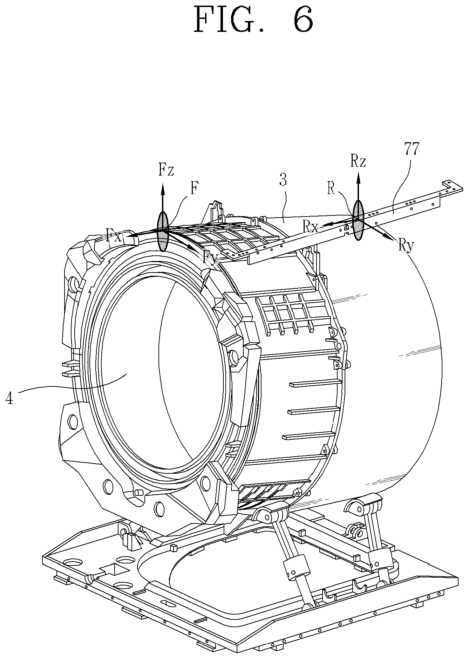

FIG. 5 is a flowchart illustrating a representative control method according the present disclosure, and FIGS. 6, 7, 8, and 9 are conceptual views illustrating the control method in FIG. 5.

First, in the detection section (section in which a rotational speed of the drum 4 is maintained at the specific rotational speed of 108 RPM), the washing machine according to the present disclosure may predict the maximum vibration displacement, which is usually generated in the transient section (150 to 600 RPM), to determine whether to initialize or continue the dewatering process at the beginning of the dewatering process. That is, the maximum vibration displacement of the tub 3 generated in the transient section may mean the maximum vibration displacement expected to be generated in the entire dewatering process.

In other words, the washing machine may determine on whether or not excessive vibration will be generated in the transient section (150 to 600 RPM) based on distribution of a load of laundry (UB) in the drum 4 at the beginning of the dewatering process (detection section).

For example, if the load of laundry in the drum 4 is unevenly distributed or unbalanced, a rotational speed of the drum 4 becomes faster, thereby increasing a possibility of excessive vibration occurring in the transient section.

In order to solve this problem, the washing machine according to this embodiment may include the vibration sensor 77 provided at the tub 3 to predict a maximum vibration displacement value of the tub 3. Here, the vibration sensor 77 provided at the tub 3 may be a 6-axis vibration sensor.

In order to predict the maximum vibration displacement value of the tub 3, a vibration displacement value and a phase measured at the detection section (108 RPM) by the 6-axis vibration sensor 77 together with an RPM variation value are input into an ANN learned through 3D unbalance (UB) deep learning as an input value, so as to obtain a predicted value of the maximum vibration displacement of the tub 3 as an output value.

In detail, the controller 60 may input a plurality of vibration displacement values, and information of a plurality of phase differences calculated based on the plurality of vibration displacement values measured by the vibration sensor 77, and a rotational speed variation value into a pre-trained or pre-learned ANN as input values, so as to output a predicted value of the maximum vibration displacement expected to be generated in the entire dewatering process as a result value.

Thereafter, the controller 60 may compare the predicted value of the maximum vibration displacement with a predetermined reference value to determine whether to initialize (terminate) the dewatering process or to continue the dewatering process at the beginning of the dewatering process.

For example, when the predicted value of the maximum vibration displacement exceeds the predetermined reference value, the controller 60 may not continue the dewatering process any further, and initialize (terminate) the dewatering process to prevent excessive vibration, thereby decreasing time required to enter the main dewatering process (process in which dewatering is performed at 108 RPM).

Hereinafter, a process of calculating a predicted value of the maximum vibration displacement will be described in detail with reference to accompanying drawings.

First, a washing machine according to this embodiment may include a tub 3, and a drum 4 accommodating a vibration sensor 77 provided at the tub 3 and a fabric (laundry) therein, and provided to be rotatable in the tub 3.

In addition, the washing machine may include a motor 9 for rotating the drum 4, and a controller 60 configured to control the motor 9 by using a vibration value (hereinafter referred to as "vibration displacement value") measured by the vibration sensor 77.

Referring to FIG. 5, the controller 60 may measure a value regarding multi-axis vibration generated in the tub 3 that includes the drum 4 at a detection section where the drum 4 is rotated at a specific rotational speed (e.g., 108 RPM) during a dewatering process (S510).

The specific rotational speed may be faster than a speed at which the drum 4 is rotated while laundry is attached to a wall surface of the drum 4, and slower than a maximum rotational speed of the dewatering process.

That is, the specific rotational speed may be faster than a minimum speed at which the drum 4 starts to rotate while the laundry is adhered to the wall surface of the drum 4 (for example, it may vary depending on a diameter of the drum, but generally between 80 and 90 RPM), and may be equal to or less than a speed of, for example, 108 RPM, which is slower than the maximum rotational speed of the dewatering process (e.g., 600 RPM) or a transient section (resonance section) (e.g., 150 to 600 RPM).

As described above, the vibration sensor 77 may be a 6-axis vibration sensor.

The 'multi-axis' may mean a plurality of different axes that can be measured by the vibration sensor (e.g., 6-axis, in case the vibration sensor is capable of sensing vibration in 6 axes).

A value related to the multi-axis vibration may include a plurality of vibration displacement values for a plurality of vibrations measured based on a plurality of different axes and information of a plurality of phase differences between the plurality of vibrations.

That is, the value related to the multi-axis vibration may mean a displacement and a phase (or phase difference) value of the multi-axis vibration (the plurality of vibrations).

The vibration sensor 77 may measure a plurality of vibration displacement values for a plurality of vibrations occurring along a plurality of different axes (e.g., 6 axes) with respect to the tub 3.

Here, the plurality of different axes (6 axes) may mean 6 different axes, and may mean axes having a plurality of different directions at a plurality of different points (or locations) of the tub 3. In other words, the plurality of different axes may mean axes, each having a different direction at a different point of the tub 3.

Referring to FIG. 6, the plurality of different points of the tub 3 may mean a front point F and a rear point R of the tub 3. The plurality of different directions may include a forward-and-backward direction x, a left-and-right direction y perpendicular to the forward-and-backward direction, and an up-and-down direction z perpendicular to the forward-and-backward direction and the left-and-right direction, respectively.

The plurality of different axes (6 axes) may be formed by a combination of a plurality of different directions at each of the plurality of different points. For example, the 6 axes may include a front forward-backward axis Fx, a front left-right axis Fy, a front up-down axis Fz, a rear forward-backward axis Rx, a rear left-right axis Ry, and a rear up-down axis Rz.

The vibration sensor 77 may measure a plurality of vibration displacement values for a plurality of vibrations occurring along the plurality of different axes Fx, Fy, Fz, Rx, Ry, and Rz with respect to the tub 3 (or in the tub 3). That is, the vibration sensor 77 may measure a plurality of displacement values of vibrations occurring in the plurality of different directions (x, y, z) at the different points (F, R) of the tub 3.

The vibration sensor 77 may be disposed at one point of the tub 3 to classify vibrations generated in the tub 3 into a plurality of vibrations based on the plurality of different axes, and a plurality of vibration displacement values for the plurality of vibrations may be measured.

The plurality of vibration displacement values may include a front forward-backward vibration displacement value (Fx vibration displacement value), a front left-right axis vibration displacement value (Fy vibration displacement value), a front up-down vibration displacement value (Fz vibration displacement value), a rear forward-backward vibration displacement value (Rx vibration displacement value), a rear left-right vibration displacement value (Ry vibration displacement value), and a rear up-down vibration displacement value (Rz vibration displacement value).

In addition, the controller 60 may calculate information of a plurality of phase differences between the plurality of vibrations occurring along the plurality of different axes (6 axes) (i.e., the plurality of classified vibrations generated in the tub 3 according to a plurality of different axes).

In other words, the controller 60 may calculate information of the plurality of phase differences between the plurality of vibration displacement values using the plurality of vibration displacement values.

The information of the plurality of phase differences may include information regarding phase differences between any one (e.g., Ry vibration) of the plurality of vibrations (Fx vibration, Fy vibration, Fz vibration, Rx vibration, Ry vibration, and Rz vibration) and the remaining vibrations (Fx vibration, Fy vibration, Fz vibration, Rx vibration, and Rz vibration).

In other words, the information of the plurality of phase differences may mean to include information regarding phase differences between any one (e.g., Ry vibration displacement value) of the plurality of vibration displacement values (Fx vibration displacement value, Fy vibration displacement value, Fz vibration displacement value, Rx vibration displacement value, Ry vibration displacement value, and Rz vibration displacement value) and the remaining vibration displacement values (Fx vibration displacement value, Fy vibration displacement value, Fz vibration displacement value, Rx vibration displacement value, and Rz vibration displacement value).

When the any one vibration, a reference vibration, is the Ry vibration (or Ry vibration displacement value), the information of the plurality of phase differences may include information of a phase difference between the front forward-backward and the rear left-right (phase difference between Fx and Ry), between the front left-right and the rear left-right (phase difference between Fy and Ry), between the front up-down and rear left-right (phase difference between Fz and Ry), between the rear front-rear and the rear left-right (phase difference between Rx and Ry), and between the rear up-down and the rear left-right (phase difference between Rz and Ry), respectively.

The controller 60 may determine the any one vibration of the plurality of vibrations (i.e., any one vibration used as a reference for obtaining a phase difference) based on a location at which the vibration sensor 77 is disposed.

When the vibration sensor 77 is located at the rear R of the tub 3, as illustrated in FIG. 6, the controller 60 may determine any one of vibrations measured from the rear (Rx vibration, Ry vibration, and Rz vibration) as the reference vibration.

Although not illustrated in the drawing, when the vibration sensor 77 is located at the front F of the tub 3, the controller 60 may select any one of vibrations (Fx vibration, Fy vibration, and Fz vibration) measured from the front as the reference vibration.

Here, the controller 60 may determine, for example, any one vibration with the largest vibration displacement value among vibrations measured from the rear (or vibrations measured from the front when the vibration sensor 77 is disposed at the front of the tub) as the reference vibration.

Alternatively, the controller 60 may determine any one vibration with the largest vibration displacement value among the measured vibration displacement values (Fx, Fy, Fz, Rx, Ry, and Rz vibration displacement values) as the reference vibration.

Alternatively, the controller 60 may determine any one vibration with the smallest vibration displacement value among the measured vibration displacement values (Fx, Fy, Fz, Rx, Ry, and Rz vibration displacement values) as the reference vibration.

Alternatively, the controller 60 may determine any one vibration as the reference vibration according to a user's setting.

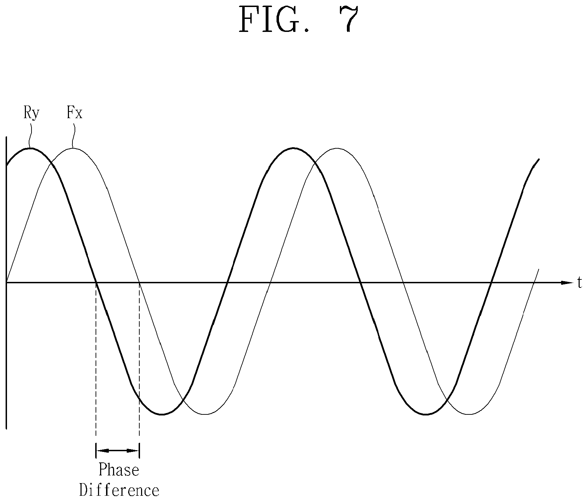

Referring to FIG. 7, the phase difference information may mean information regarding a time difference between a plurality of vibrations generated in a plurality of axes. That is, the phase difference (difference of phase) may mean a time difference between vibrations.

For example, the phase difference between Fx and Ry may mean a time difference between a vibration generated in the front forward-backward (Fx) axis and a vibration generated in the rear left-right (Ry) axis, based on the vibration of the rear left-right (Ry) axis.

For example, as illustrated in FIG. 7, the phase difference between Fx and Ry may mean a time difference between the FX vibration's point of origin and the Ry vibration's point of origin, based on the Ry vibration's point of origin.

In this specification, any one vibration used as a reference for expressing phase difference information is placed at the end, and the other vibration used as a target for comparison (or a target to be measured) is put before the reference vibration. That is, the phase difference between Fx and Ry may mean a phase difference between a Fx (front forward-backward) vibration and a Ry (rear left-right) vibration based on the Ry vibration.

It should be noted that an expression of the phase difference is not absolute. Also, although it may be expressed differently depending on what is used as a reference vibration, a physical meaning may be the same.

The controller 60 may measure a plurality of vibration displacement values for a plurality of vibrations measured from a plurality of axes, respectively. In addition, the controller 60 may calculate (determine) information of a plurality of phase differences between the plurality of vibrations measured based on the plurality of axes.

When the number of the plurality of axes is 'n', the number of the plurality of vibration displacement values may be equal to the number of the plurality of axes 'n', and the information of the plurality of phase differences may be one less than the number of the plurality of axes 'n-1'. This is because information of the phase difference is calculated based on any one of the vibrations.

In addition, the controller 60 may calculate the rotational speed variation value (RPM variation value), as described above with reference to FIG. 4.

The rotational speed variation value may be calculated based on, for example, rotational speed values of the drum 4 sensed by the speed sensing unit 74.

As described above, unbalance (UB) occurs when the load of laundry is unevenly spread in the drum 4. So even if the controller 60 controls the drum 4 to rotate at the rotational speed of the detection section (108 RPM), the rotational speed of the drum 4, as shown in FIG. 4, may actually be variable (or fluctuate) without being constantly maintained.

The controller 60 may calculate (determine) the rotational speed variation value based on an actual rotational speed of the drum 4 measured by the speed sensing unit 74. Here, the rotational speed variation value may be used to calculate a UB value or may be a UB value itself.

Thereafter, the controller 60 according to the present disclosure may calculate a predicted value of the maximum vibration displacement expected to be generated in the tub 3 by using measured values (S520).

The measured values may include the plurality of vibration displacement values and the information of the plurality of phase differences as described above. In addition, the measured values may further include a rotational speed variation value.

The controller 60 may input at least one of the plurality of vibration displacement values, the information of the plurality of phase differences, and the rotational speed variation value as an input value of the pre-trained ANN to calculate a predicted value of the maximum vibration displacement as an output value.

In the present disclosure, it may include an ANN for calculating a predicted value of the maximum vibration displacement expected to be generated in the entire dewatering process as a result value. Information regarding the ANN may be pre-stored in the memory 78 or the controller 60.

Here, the maximum vibration displacement is, generally, generated in the transient section where the drum 4 is rotated at 150 to 600 RPM. The maximum vibration displacement generated in the entire dewatering process may mean the maximum vibration displacement generated in the transient section.

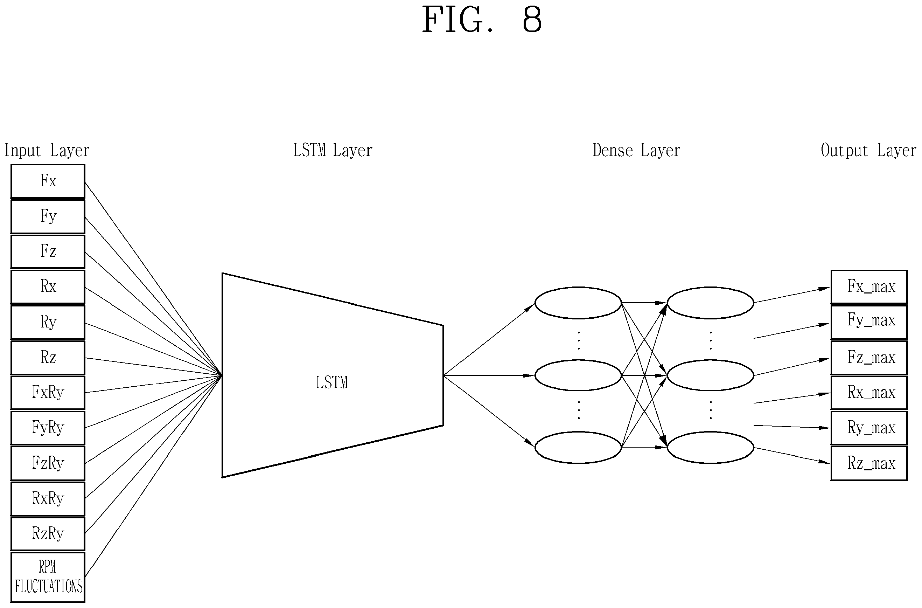

As illustrated in FIG. 8, the controller 60 may input a plurality of vibration displacement values (Fx vibration displacement value, Fy vibration displacement value, Fz vibration displacement value, Rx vibration displacement value, Ry vibration displacement value, and Rz vibration displacement value) measured by the vibration sensor 77 in the detection section (section where the drum 4 is rotated at the specific rotational speed of 108 RPM), information of a plurality of phase differences (phase difference between Fx and Ry, phase difference between Fy and Ry, phase difference between Fz and Ry, phase difference Rx and Ry, and phase difference between Rz and Ry), and a rotational speed (RPM) variation value as input layers of a pre-trained ANN.

The pre-trained ANN may consist of a Long-Short-Term Memory (LSTM) layer using a LSTM network and a dense layer as shown in FIG. 8.

The pre-trained ANN may be a neural network learned to detect (predict) three-dimensional UB (3D UB) caused by laundry unevenly distributed in the drum 4, and calculate a predicted value of the maximum vibration displacement to be generated accordingly.

As illustrated in FIG. 8, when the plurality of vibration displacement values measured in the detection section (108 RPM), the information of the plurality of phase differences, and the rotational speed variation value are entered as the input layers, the pre-trained ANN may output predicted values of the maximum vibration displacement expected to be generated in the entire sections of the dewatering process (or the transient section (the section in which the drum rotates at 150 to 600 RPM)) as output layers.

The pre-trained ANN may be a machine-learned neural network trained to collect input layers of various loads (six displacement values, five phase difference values and one rotational speed variation value) and corresponding output layers (six predicted values of the maximum vibration displacement) through a preliminary experiment.

It should be noted that a kind and the number of input layers and output layers shown in FIG. 8 are just one example, and are not limited thereto.

In the pre-trained ANN according to the present disclosure, at least some of the input values shown in FIG. 8 may be omitted or added, and at least some of the output values may be omitted or added.

That is, an 'input' and 'output' of the neural network are just one exemplary embodiment. Smaller input and output layers may also be used, or a new input parameter and a necessary output factor may be added as necessary.

Deep learning is an algorithm that mimics the human brain, which means to learn by finding a pattern that humans can't directly find.

The pre-trained ANN means a neural network learned through deep learning.

Deep learning, a class of machine learning, may mean to learn deep down to multi-levels based on data.

Deep learning may represent a set (collection) of machine learning algorithms that extract key data from multiple data by going through hidden layers in order.

In the present disclosure, when predicting 3D UB in dewatering (i.e., when determining (calculating) a predicted value of the maximum vibration displacement), a LSTM (Long-Short-Term Memory) network, which is one of the best performing networks among machine learning based networks developed to date, may be used.

The LSTM network may include a forget gate for deleting the past, an input gate for storing current information, and an output gate for a final result.

Meanwhile, the network of the pre-trained ANN according to the present disclosure is not limited to the LSTM network, and other networks may also be used for prediction.

For example, the pre-trained ANN used to calculate the predicted value of the maximum vibration displacement may be constructed as a Deep Neural Network (DNN) such as a Convolutional Neural Network (CNN), a Recurrent Neural Network (RNN), a Deep Belief Network (DBN), and the like, or may be constructed as a single neural network for one output.

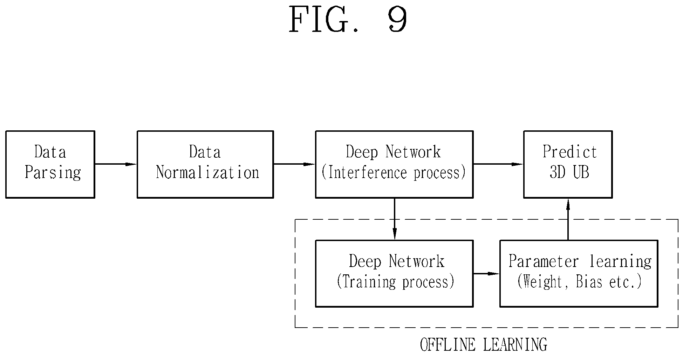

A method for performing 3D UB deep learning by the controller 60 is illustrated in FIG. 9. Referring to FIG. 9, the controller 60 may predict 3D UB by inputting measured values into the pre-trained ANN after parsing and normalizing the measured values (e.g., a plurality of vibration displacement values, information of a plurality of phase differences, and a rotational speed variation value).

Here, predicting the 3D UB means that predicting excessive vibration expected to be generated during the dewatering process. In order to predict this, the controller 60 may determine (calculate) a predicted value of the maximum vibration displacement to be generated during the dewatering process through the pre-trained ANN

Thereafter, when the predicted value of the maximum vibration displacement is larger than a predetermined reference value, the controller 60 may predict (determine) that excessive vibration will occur.

Meanwhile, the controller 60 may use actually measured maximum vibration displacement values and the measured values to train (i.e., update) the pre-trained ANN once again (Deep Network (Training process) and parameter learning)

For example, the pre-trained ANN may include an input layer, a hidden layer, and an output layer. Having multiple hidden layers is referred to as a Deep Neural Network (DNN). Each layer has a plurality of nodes, and each layer is connected to the next layer. Nodes may be interconnected with weights.

An output from any node belonged to a first hidden layer (Hidden Layer 1) may be input to at least one node belonged to a second hidden layer (Hidden Layer 2). In this case, an input of each node may be a value obtained by applying a weight to a node of the previous layer. The weight may mean link strength between nodes. The deep learning process may be seen as a process of finding proper weights.

The ANN applied to the washing machine according this embodiment may be a DNN learned through supervised learning using the measured values (e.g., the plurality of vibration displacement values, the information of the plurality of phase differences, and the rotational speed variation value) as input data, and the maximum vibration displacement value measured through an experiment (or actually measured maximum vibration displacement value) as result data.

The supervised learning may refer to one method of machine learning for deriving a function from training data.

The ANN according to this embodiment may be a DNN in which hidden layers are trained by inputting measured values (e.g., the plurality of vibration displacement values, the information of the plurality of phase differences, and the rotational speed variation value) as input data, and inputting a maximum vibration displacement value as a result value. Here, "training the hidden layers" may mean adjusting (updating) the weights of inter-node connection lines included in the hidden layers.

Using this ANN, the controller 60 according to this embodiment may use values (e.g., the plurality of vibration displacement values, the information of the plurality of phase differences, and the rotational speed variation value) measured in the detection section (section where a rotational speed of the drum 4 is maintained at the specific rotational speed of 108 RPM) as input values (layers) of the ANN, so as to calculate (predict, determine, and estimate) a predicted value of the maximum vibration displacement expected to be generated in the dewatering process.

The controller 60 may perform learning by using the measured values (e.g., the plurality of vibration displacement values, the information of the plurality of phase differences, and the rotational speed variation value) as training data.

The controller 60 may update a DNN structure such as weight, bias, and the like whenever recognizing or determining a predicted value of the maximum vibration displacement (or maximum vibration displacement value) by adding determined results and a plurality of types of data entered at that time to a database. Also, the controller 60 may update the DNN structure such as weight, and the like by performing a supervised learning process using training data after a predetermined number of training data is obtained.

The controller 60 of the washing machine according to this embodiment may input at least one of the plurality of vibration displacement values, information of the plurality of phase differences, and the rotational speed variation value as input values (layers) of the pre-trained ANN, so as to calculate (or determine) the predicted value of the maximum vibration displacement as an output value (layer).

Referring back to FIG. 5, the controller 60 may determine whether to initialize the dewatering process at the detection section based on the determined predicted value of the maximum vibration displacement determined and the predetermined reference value (S530).

For example, the controller 60 may initialize the dewatering process at the detection section when the determined predicted value of the maximum vibration displacement exceeds the predetermined reference value.

As another example, if the determined predicted value of the maximum vibration displacement is equal to or less than the predetermined reference value, the controller 60 may rotate the drum 4 at a faster rotational speed than that of the detection section (i.e., moving to the next dewatering section after the detection section, or continuing to the next dewatering process after the detection section).

As described above, the controller 60 may determine (calculate) a predicted value of the maximum vibration displacement by inputting at least one of the plurality of vibration displacement values measured in the detection section where rotation of the drum 4 is maintained at the specific rotational speed (108 RPM), the information of the plurality of phase differences, and the rotational speed variation value as input values of the pre-trained ANN (3D UB deep learning neural network).

The predicted value of the maximum vibration displacement may mean a maximum vibration value expected to be generated in the tub 3, and a displacement value of the maximum vibration (amplitude) to be generated not only in the detection section but also in the entire dewatering process.

The maximum vibration occurs in the transient section (section where the drum 4 is rotated at 150 to 600 RPM) of the entire dewatering process.

At the detection section (the section in which the drum 4 is rotated at the specific rotational speed 108 RPM), the controller 60 may determine (or predict) a displacement value of the maximum vibration (i.e., a predicted value of the maximum vibration displacement) expected to be generated in the transient section.

The predicted value of the maximum vibration displacement may be output (calculated) as a result value (or output layer) of the pre-trained ANN as shown in FIG. 8.

The predicted value of the maximum vibration displacement may include a plurality of predicted displacement values of the maximum vibration expected to be generated in each of the plurality of different axes (multi-axis).

In detail, the plurality of predicted values of the maximum vibration displacement may include a predicted value of the maximum vibration displacement expected to be generated in the front forward-backward (Fx) axis Fx_max, a predicted value of the maximum vibration displacement expected to be generated in the front left-right (Fy) axis Fy_max, a predicted value of the maximum vibration displacement expected to be generated in the front up-down (Fz) axis Fz_max, a predicted value of the maximum vibration displacement expected to be generated in the rear forward-backward (Rx) axis (Rx max), a predicted value of the maximum vibration displacement expected to be generated in the rear left-right (Ry) axis Ry_max, and a predicted value of the maximum vibration displacement expected to be generated in the rear up-down (Rz) axis Rz_max.

The number of the plurality of predicted values of the maximum vibration displacement may correspond to the number of a plurality of different axes (multi-axis) measured by the vibration sensor 77. If the number of the plurality of axes is 'n', the number of the plurality of predicted values of the maximum vibration displacement may also be 'n'.

The controller 60 may initialize the dewatering process at the detection section when the determined predicted value of the maximum vibration displacement exceeds the predetermined reference value.

In detail, the controller 60 may compare the determined predicted value of the maximum vibration displacement with the predetermined reference value to determine whether to initialize (terminate) the dewatering process, or to continue the dewatering process further at the detection section where the drum 4 rotates at the specific rotational speed (108 RPM).

Here, when each of the plurality of predicted values of the maximum vibration displacement (Fx_max, Fy_max, Fz_max, Rx_max, Ry_max, and Rz_max) are all less than or equal to the predetermined reference value, the controller 60 may rotate the drum 4 faster than the specific rotational speed of the detection section (i.e., dewatering process may be continued).

Rotating the drum 4 faster than the specific rotational speed of the detection section may also mean to perform the main dewatering process where the drum 4 is rotated at high RPM of 150 to 600 RPM (transient section) or more.

In addition, the controller 60 may stop (or terminate) rotation of the drum 4 at the detection section, when at least one of the plurality of predicted values of the maximum vibration displacement (Fx_max, Fy_max, Fz _max, Rx_max, Ry_max, Rz_max) exceeds the predetermined reference value.

Terminating the rotation of the drum 4 may be included in the meaning of 'initializing the dewatering process'. That is, in this specification, initializing the dewatering process may mean that stopping (terminating) the rotation of the drum 4 to restart the dewatering process from the step (or section) after detecting the load or amount of laundry.

The predetermined reference value may be set for each of the plurality of different axes (multi-axis, 6-axis).

For example, a predetermined first reference value may be set for the front forward-backward (Fx) axis, and a predetermined second reference value, which is differentiated from the first reference value, may be set for the front left-right (Fy) axis. In addition, a third reference value for the front up-down (Fz) axis, a fourth reference value for the rear forward-backward (Rx) axis, a fifth reference value for the rear left-right (Ry) axis, and a sixth reference value for the rear up-down (Rz) axis may be set, respectively.

The predetermined reference values set for each of the plurality of different axes may have the same or different values.

The predetermined reference values set for each of the plurality of different axes may be set based on a gap between the tub 3 and the cabinet 1.

For example, if a gap between an origin point of the front forward-backward (Fx) axis and the cabinet is 11 mm, the first reference value set for the front forward-backward (Fx) axis may be less than 11 mm.

When the predicted values of the maximum vibration displacement determined (calculated) for the plurality of different axes do not exceed (equal to or lower than) the respective predetermined reference values, the controller 60 may rotate the drum 4 faster than the specific rotational speed of the detection section (i.e., the dewatering process may be performed at high RPM).

On the other hand, when at least one of the predicted values of the maximum vibration displacement determined (calculated) for the plurality of different axes exceeds the respective predetermined reference value (for example, when Fx_max exceeds the first reference value set for the Fx axis), the controller 60, without increasing the rotational speed of the drum 4 at the detection section, may initialize the dewatering process (i.e., terminate (stop) the rotation of the drum 4, and restart the dewatering process from the step (or section) after detecting the load of laundry.

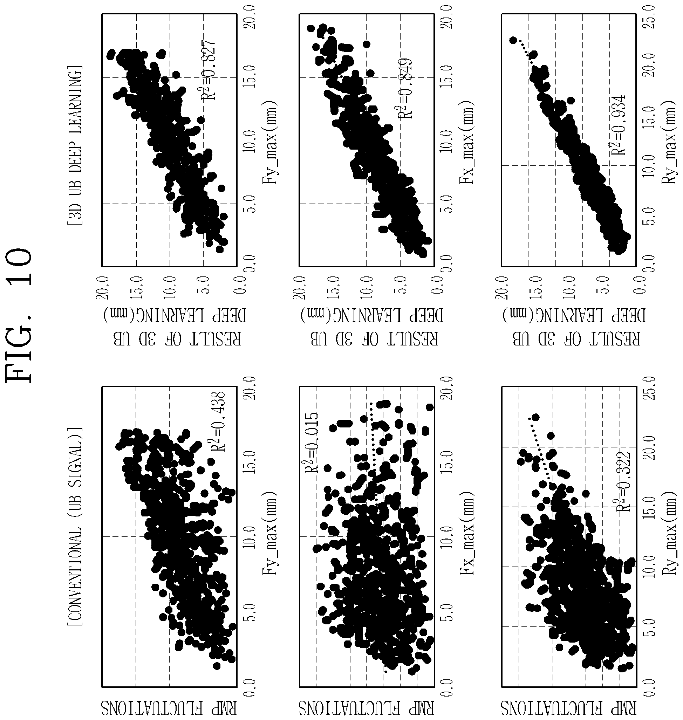

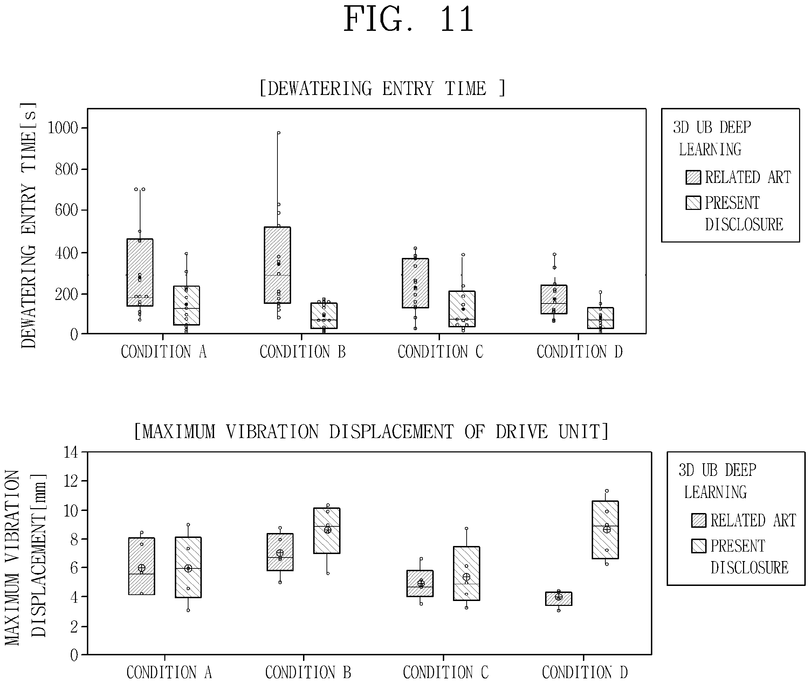

FIGS. 10 and 11 are result data of experiments employing a control method according to an embodiment.

FIG. 10 shows experiment results of a correlation between predicted values of the maximum vibration displacement (Fx_max, Fy_max, Ry_max) calculated by a pre-trained ANN according to an embodiment and values of the maximum vibration displacement measured through an experiment.

When vibration is measured based on the existing UB signal (UB value, rotational speed variation value), a correlation coefficient of the two is 0.5 or less. On the other hand, when vibration is measured using the pre-trained ANN employing 3D UB deep learning, a correlation coefficient of the two is 0.8 or more, showing a stronger correlation.

As such, in the present disclosure, a plurality of vibration displacement values measured by the vibration sensor 77, information of a plurality of phase differences, and a rotational speed variation value are entered into the ANN pre-trained by 3D UB deep learning to output a predicted value of the maximum vibration displacement (result value). The predicted value of the maximum vibration displacement has a pretty strong correlation with a maximum vibration displacement value actually measured, thereby significantly increasing accuracy of predicting excessive vibration.

In addition, it can be seen that data of the predicted value of the maximum vibration displacement determined (calculated) using the ANN pre-trained by 3D UB deep learning is highly reliable.

FIG. 11 shows experiment results of a dewatering entry time and the maximum vibration displacement of the drive unit (tub with drum) in which the ANN pre-trained by 3D UB deep learning according to the present disclosure is applied to determine whether to initialize the dewatering process at the detection section, or to continue the dewatering process.

It can be seen that there is a remarkable decrease in the dewatering entry time compared to the existing product (i.e., when a UB signal is only considered), when the predetermined reference value of each of the plurality of axes, used as a comparison with a predicted value of the maximum vibration displacement, is set within a range (value) for preventing the tub 3 and the cabinet 1 from colliding with each other.

Here, the dewatering entry time may be time required to enter the process of dewatering while the drum 4 is rotated faster than that of the detection section (section where the drum 4 rotates at the specific rotational speed (108 RPM)), that is, time required for entering the main dewatering process, or high-speed dewatering process.

Here, a condition D of the maximum vibration displacement of the drive unit is that the existing UB detection criterion (or reference) is set to be excessively low. As for the experiment result of the present disclosure employing 3D UB deep learning, in order to reduce the dewatering entry time, the predetermined reference value, which is compared with a prediction value of the maximum vibration displacement, is loosened (the predetermined reference value is set as large as possible within a range not to make the tub collide with the cabinet).

The washing machine according to the present disclosure may set a reference value (i.e., a reference limit of displacement) according to each of the plurality of axes (multi-axis, each vibration direction) by considering a gap between the drive unit (tub with drum) and the cabinet, so as not to collide with each other with respect to the different axes.

At the detection section where the drum 4 is rotated at the specific rotational speed (108 RPM), if any one of the predicted values of the maximum vibration displacement calculated or determined by 3D UB deep learning exceeds the predetermined reference value, the controller 60 may stop the rotation of the drum 4, so that the dewatering process is restarted (initialized) after detecting the load of laundry.

Here, predicting the maximum vibration displacement through 3D UB deep learning, as described above, may mean that a plurality of vibration displacement values for the plurality of different axes measured by the vibration sensor 77, information of the plurality of phase differences between a plurality of vibrations detected from the plurality of axes, and a rotational speed variation value are entered as input values of the pre-trained ANN to determine (calculate, output) a predicted value of the maximum vibration displacement for each of the plurality of axes as result values.

In addition, the predicted value of the maximum vibration displacement may mean a displacement value of the maximum vibration expected to be generated in the entire dewatering process (or transient section), not just limited to the detection section.

Thereafter, when all predicted values of the plurality of the different axes do not exceed the respective predetermined reference values, the controller 60 may proceed with the main dewatering process in which the drum 4 is rotated faster than the specific rotational speed (108 RPM) of the detection section.

In addition, when at least one of the predicted values of the maximum vibration displacement determined (calculated) for each of the plurality of different axes exceeds the respective predetermined reference value, the controller 60 may stop the rotation of the drum 4 and perform initializing (or terminating) the dewatering process to restart the dewatering process from the step after detecting the load of laundry.

With this configuration, it may prevent the dewatering process from being initialized, caused by a vibration value exceeding the reference value, in the middle of dewatering after having passed the detection section, thereby reducing time required for dewatering and preventing excessive vibration from occurring.

In addition, according to embodiments disclosed herein, power consumption may be reduced by preventing the dewatering process from being initialized in a state that the rotational speed (RPM) of the drum 4 is increased after the detection section.

Further, according to embodiments disclosed herein, an occurrence of abnormal vibration (excessive vibration) at the resonance section (transient section, 150 to 600 RPM) may be accurately predicted using a large amount of information (12 pieces of information, in total) based on deep learning, compared to the conventional methods using limited information, which is based on information prior to resonance generated in the transient section.

The excessive vibration described herein refers to a huge vibration (e.g., vibration having the maximum vibration displacement value greater than the predetermined refence value) which is large enough to make the drive unit (tub with drum) collide with the cabinet.

The present disclosure directly predicts whether excessive vibration is generated based on the predicted value of the maximum vibration displacement using the pre-trained ANN, thereby increasing prediction accuracy significantly.

In addition, according to embodiments disclosed herein, an AI dewatering algorithm may be provided to more accurately determine whether to initialize the dewatering process in a low RPM section (e.g., 108 RPM or less) before entering a high RPM section (e.g., 150 RPM or more, or the transient section (resonance section)).

Effects of the embodiments disclosed herein will be described as follows.

First, the maximum vibration displacement expected to be generated during a dewatering process is predicted at a detection section, thereby determining whether to initialize the dewatering process, or to continue the dewatering process at the beginning of dewatering.

Second, unbalance (UB) that causes excessive vibration to occur may be detected at an early stage of the dewatering process, allowing the dewatering process to be initialized early. As a result, time required for dewatering can be reduced.

Third, when a predicted value of the maximum vibration displacement, which is calculated in the detection section by an ANN, exceeds a preset reference value, the dewatering process is initialized (or stopped) without continuing the dewatering process further, thereby preventing excessive vibration from occurring and decreasing time taken to enter the dewatering process.

The effects of the present disclosure are not limited to those effects mentioned above, and other effects not mentioned may be clearly understood by those skilled in the art from the description of the appended claims.

The above description may also be equally or similarly applied to a method for controlling a washing machine. The method of controlling the washing machine may be performed by, for example, the controller 60.

The present disclosure described above can be implemented as computer-readable codes on a program-recorded medium. The computer readable medium includes all kinds of recording devices in which data readable by a computer system is stored. Examples of such computer-readable media may include hard disk drive (HDD), solid state disk (SSD), silicon disk drive (SDD), ROM, RAM, CD-ROM, magnetic tape, floppy disk, optical data storage element and the like. The computer may include the processor or the controller. Therefore, it should also be understood that the above-described embodiments are not limited by any of the details of the foregoing description, unless otherwise specified, but rather should be construed broadly within its scope as defined in the appended claims, Therefore, all changes and modifications that fall within the metes and bounds of the claims are therefore intended to be embraced by the appended claims.

## Claims

1. A method for controlling a washing machine comprising a tub (3), a vibration sensor (77) provided at the tub (3) and a drum (4) configured to accommodate laundry therein and rotatably provided in the tub (3),
**characterized in that** the method comprises:
measuring (S510) a value of multi-axis vibration of the tub (3) during a detection section of a dewatering process in which the drum (4) rotates at a predetermined rotational speed;
determining (S520) a predicted value of maximum vibration displacement of the tub (3) expected to be generated during the dewatering process based on the measured value; and
determining (S530) whether to restart the dewatering process after the detection section, based on the predicted value of the maximum vibration displacement and a predetermined reference value.

2. The method of claim 1, wherein the step of measuring (S510) a value of multi-axis vibration comprises measuring a plurality of vibration displacement values for a plurality of vibrations along a plurality of different axes.

3. The method of claim 1 or 2, wherein the step of measuring (S510) a value of multi-axis vibration comprises calculating a plurality of values of phase differences between the plurality of vibrations.

4. The method of claim 3, wherein the plurality of values of phase differences includes information regarding phase differences between any one of the plurality of vibrations and the remaining vibrations of the plurality vibrations.

5. The method of claim 2, 3 or 4, wherein the step of determining (S520) a predicted value comprises inputting at least one of the plurality of vibration displacement values, the plurality of values of phase differences, and a rotational speed variation value as input values in a pre-trained Artificial Neural Network (ANN) and receiving the predicted value of the maximum vibration displacement as an output value of the pre-trained Artificial Neural Network.

6. The method of any one of the preceding claims, wherein the predicted value of the maximum vibration displacement includes a plurality of predicted values of maximum vibration displacement expected to be generated along each of the plurality of different axes.

7. The method of claim 6, further comprising the step of rotating the drum (4) faster than the predetermined rotational speed of the detection section if all of the plurality of predicted values of the maximum vibration displacement are equal to or less than the predetermined reference value.

8. The method of claim 6 or 7, further comprising the step of stopping rotation of the drum (4) after the detection section of the dewatering process if at least one of the plurality of predicted values of the maximum vibration displacement exceeds the predetermined reference value.

9. The method of any one of the preceding claims, wherein the predetermined reference value comprises a reference value set respectively for each of the plurality of different axes, and/or wherein the predetermined reference value is set based on a gap between the tub (3) and a cabinet (1) of the washing machine.

10. The method of any one of the preceding claims, wherein the predetermined rotational speed is higher than a minimum rotational speed of the drum (4) at which the laundry is attached to a wall surface of the drum (4) and lower than a maximum rotational speed of the dewatering process.

11. A washing machine, comprising:
a tub (3);
a vibration sensor (77) provided at the tub (3);
a drum (4) configured to accommodate laundry therein, and rotatably provided in the tub (3); and
a controller (60),
**characterized in that** the controller is configured to:
measure a value of multi-axis vibration of the tub (3) using the vibration sensor (77) during a detection section of a dewatering process in which the drum (4) rotates at a predetermined rotational speed,
determine a predicted value of maximum vibration displacement of the tub (3) expected to be generated during the dewatering process based on the measured value, and
determine whether to restart the dewatering process after the detection section based on the predicted value of the maximum vibration displacement and a predetermined reference value.

12. The washing machine of claim 11, wherein the vibration sensor (77) is configured measure a plurality of vibration displacement values for a plurality of vibrations of the tub (3) along a plurality of different axes.

13. The washing machine of claim 12, wherein the controller (60) is configured to calculate a plurality of values of phase differences between the plurality of vibrations.

14. The washing machine of any one of claims 11 to 13, wherein the predicted value of the maximum vibration displacement includes a plurality of predicted values of maximum vibration displacement expected to be generated along each of the plurality of different axes.

15. The washing machine of claim 14, wherein the controller (60) is configured to rotate the drum (4) faster than the predefined rotational speed of the detection section when all of the plurality of predicted values of the maximum vibration displacement are equal to or less than the predetermined reference value, and/or
wherein the controller (60) is configured to stop rotation of the drum (4) after the detection section when at least one of the plurality of predicted values of the maximum vibration displacement exceeds the predetermined reference value.

## Patentansprüche

1. Verfahren zum Steuern einer Waschmaschine, die einen Bottich (3), einen Schwingungssensor (77), der am Bottich (3) vorgesehen ist, und eine Trommel (4), die für die Aufnahme von Wäsche konfiguriert ist und im Bottich (3) drehbar vorgesehen ist, umfasst,
**dadurch gekennzeichnet, dass** das Verfahren die folgenden Schritte umfasst:
Messen (S510) eines Werts einer mehrachsigen Schwingung des Bottichs (3) während eines Detektionsabschnitts eines Entwässerungsvorgangs, bei dem sich die Trommel (4) mit einer festgelegten Drehzahl dreht;
Bestimmen (S520) eines Vorhersagewerts einer maximalen Schwingungsverlagerung des Bottichs (3), von dem auf der Basis des gemessenen Werts erwartet wird, dass er während des Entwässerungsvorgangs auftritt; und
Bestimmen (S530), ob der Entwässerungsvorgang nach dem Detektionsabschnitt erneut gestartet werden soll, auf der Basis des Vorhersagewerts der maximalen Schwingungsverlagerung und eines festgelegten Referenzwerts.

2. Verfahren nach Anspruch 1, wobei der Schritt des Messens (S510) eines Werts einer mehrachsigen Schwingung das Messen einer Mehrzahl von Schwingungsverlagerungswerten für eine Mehrzahl von Schwingungen längs einer Mehrzahl von unterschiedlichen Achsen umfasst.

3. Verfahren nach Anspruch 1 oder 2, wobei der Schritt des Messens (S510) eines Werts einer mehrachsigen Schwingung das Berechnen einer Mehrzahl von Phasenverschiebungswerten zwischen der Mehrzahl von Schwingungen umfasst.

4. Verfahren nach Anspruch 3, wobei die Mehrzahl von Phasenverschiebungswerten Informationen bezüglich der Phasenverschiebungen zwischen einer beliebigen der Mehrzahl von Schwingungen und den verbleibenden Schwingungen der Mehrzahl von Schwingungen umfassen.

5. Verfahren nach Anspruch 2, 3 oder 4, wobei der Schritt des Bestimmens (S520) eines Vorhersagewerts das Eingeben wenigstens eines Werts der Mehrzahl von Schwingungsverlagerungswerten, der Mehrzahl von Phasenverschiebungswerten und eines Drehzahl-Änderungswerts als Eingangswerte in ein zuvor trainiertes künstliches neuronales Netz (ANN) und das Empfangen des Vorhersagewerts der maximalen Schwingungsverlagerung als einen Ausgangswert des zuvor trainierten künstlichen neuronalen Netzes umfasst.

6. Verfahren nach einem der vorhergehenden Ansprüche, wobei der Vorhersagewert der maximalen Schwingungsverlagerung eine Mehrzahl von Vorhersagewerten einer maximalen Schwingungsverlagerung umfasst, von denen erwartet wird, dass sie längs der jeweiligen der Mehrzahl von unterschiedlichen Achsen auftreten.

7. Verfahren nach Anspruch 6, das ferner den Schritt des schnelleren Drehens der Trommel (4) im Vergleich zur festgelegten Drehzahl des Detektionsabschnitts umfasst, wenn alle Vorhersagewerte der maximalen Schwingungsverlagerung kleiner oder gleich dem festgelegten Referenzwert sind.

8. Verfahren nach Anspruch 6 oder 7, das ferner den Schritt des Stoppens der Drehung der Trommel (4) nach dem Detektionsabschnitt des Entwässerungsvorgangs umfasst, falls wenigstens eine der Mehrzahl von Vorhersagewerten der maximalen Schwingungsverlagerung den festgelegten Referenzwert überschreitet.

9. Verfahren nach einem der vorhergehenden Ansprüche, wobei der festgelegte Referenzwert jeweils einen Referenzwertsatz für jede der Mehrzahl von unterschiedlichen Achsen umfasst, und/oder wobei der festgelegte Referenzwert auf der Basis eines Abstands zwischen dem Bottich (3) und dem Gehäuse (1) der Waschmaschine eingestellt ist.

10. Verfahren nach einem der vorhergehenden Ansprüche, wobei die festgelegte Drehzahl höher als eine minimale Drehzahl der Trommel (4), bei der die Wäsche an einer Wandfläche der Trommel (4) haftet, und niedriger als eine maximale Drehzahl des Entwässerungsvorgangs ist.

11. Waschmaschine, die Folgendes umfasst:
einen Bottich (3);
einen Schwingungssensor (77), der am Bottich (3) vorgesehen ist;
eine Trommel (4), die konfiguriert ist, Wäsche aufzunehmen, und die im Bottich (3) drehbar vorgesehen ist; und
eine Steuerung (60),
**dadurch gekennzeichnet, dass** die Steuerung konfiguriert ist, die folgenden Schritte auszuführen:
Messen eines Werts einer mehrachsigen Schwingung des Bottichs (3) unter Verwendung des Schwingungssensors (77) während eines Detektionsabschnitts eines Entwässerungsvorgangs, bei dem sich die Trommel (4) mit einer festgelegten Drehzahl dreht,
Bestimmen eines Vorhersagewerts einer maximalen Schwingungsverlagerung des Bottichs (3), von dem auf der Basis des gemessenen Werts erwartet wird, dass er während des Entwässerungsvorgangs auftritt, und
Bestimmen, ob der Entwässerungsvorgang nach dem Detektionsabschnitt erneut gestartet werden soll, auf der Basis des Vorhersagewerts der maximalen Schwingungsverlagerung und eines festgelegten Referenzwerts.

12. Waschmaschine nach Anspruch 11, wobei der Schwingungssensor (77) konfiguriert ist, eine Mehrzahl von Schwingungsverlagerungswerten für eine Mehrzahl von Schwingungen des Bottichs (3) längs einer Mehrzahl von unterschiedlichen Achsen zu messen.

13. Waschmaschine nach Anspruch 12, wobei die Steuerung (60) konfiguriert ist, eine Mehrzahl von Phasenverschiebungswerten zwischen der Mehrzahl von Schwingungen zu berechnen.

14. Waschmaschine nach einem der Ansprüche 11 bis 13, wobei der Vorhersagewert der maximalen Schwingungsverlagerung eine Mehrzahl von Vorhersagewerten einer maximalen Schwingungsverlagerung umfasst, von denen erwartet wird, dass sie jeweils längs der Mehrzahl von unterschiedlichen Achsen auftreten.

15. Waschmaschine nach Anspruch 14, wobei die Steuerung (60) konfiguriert ist, die Trommel (4) im Vergleich zur festgelegten Drehzahl des Detektionsabschnitts schneller zu drehen, wenn alle Vorhersagewerte der maximalen Schwingungsverlagerung kleiner oder gleich dem festgelegten Referenzwert sind, und/oder
wobei die Steuerung (60) konfiguriert ist, die Drehung der Trommel (4) nach dem Detektionsabschnitt zu stoppen, wenn wenigstens einer der Mehrzahl von Vorhersagewerten der maximalen Schwingungsverlagerung den festgelegten Referenzwert überschreitet.

## Revendications

1. Procédé pour commander une machine à laver comportant une cuve (3), un capteur de vibrations (77) agencé sur la cuve (3) et un tambour (4) configuré pour recevoir le linge dans celui-ci et agencé de façon à pouvoir tourner dans la cuve (3),
**caractérisé en ce que** le procédé comporte les étapes consistant à :
mesurer (S510) une valeur de vibration multiaxiale de la cuve (3) pendant une section de détection d'un processus d'essorage au cours duquel le tambour (4) tourne à une vitesse de rotation prédéterminée ;
déterminer (S520) une valeur prédite de déplacement vibratoire maximal de la cuve (3) qui devrait être généré pendant le processus d'essorage sur la base de la valeur mesurée ; et
déterminer (S530) s'il faut relancer le processus d'essorage après la section de détection, sur la base de la valeur prédite du déplacement vibratoire maximal et d'une valeur de référence prédéterminée.

2. Procédé selon la revendication 1, dans lequel l'étape de mesure (S510) d'une valeur de vibration multiaxiale comporte la mesure d'une pluralité de valeurs de déplacement vibratoire pour une pluralité de vibrations le long d'une pluralité d'axes différents.

3. Procédé selon la revendication 1 ou 2, dans lequel l'étape de mesure (S510) d'une valeur de vibration multiaxiale comporte le calcul d'une pluralité de valeurs de différences de phase entre la pluralité de vibrations.

4. Procédé selon la revendication 3, dans lequel la pluralité de valeurs de différences de phase inclut des informations concernant des différences de phase entre une vibration quelconque de la pluralité de vibrations et les vibrations restantes de la pluralité de vibrations.

5. Procédé selon la revendication 2, 3 ou 4, dans lequel l'étape de détermination (S520) d'une valeur prédite comporte l'application d'au moins une valeur parmi la pluralité de valeurs de déplacement vibratoire, la pluralité de valeurs de différences de phase et d'une valeur de variation de vitesse de rotation en tant que valeurs d'entrée dans un réseau neuronal artificiel (ANN) pré-entraîné et la réception de la valeur prédite du déplacement vibratoire maximal en tant que valeur de sortie du réseau neuronal artificiel pré-entraîné.

6. Procédé selon l'une quelconque des revendications précédentes, dans lequel la valeur prédite du déplacement vibratoire maximal inclut une pluralité de valeurs prédites de déplacement vibratoire maximal qui devrait être généré le long de chaque axe de la pluralité d'axes différents.

7. Procédé selon la revendication 6, comportant en outre l'étape consistant à faire tourner le tambour (4) plus rapidement que la vitesse de rotation prédéterminée de la section de détection si toutes les valeurs de la pluralité de valeurs prédites du déplacement vibratoire maximal sont égales ou inférieures à la valeur de référence prédéterminée.

8. Procédé selon la revendication 6 ou 7, comportant en outre l'étape consistant à arrêter la rotation du tambour (4) après la section de détection du processus d'essorage si au moins une valeur parmi la pluralité de valeurs prédites du déplacement vibratoire maximal dépasse la valeur de référence prédéterminée.

9. Procédé selon l'une quelconque des revendications précédentes, dans lequel la valeur de référence prédéterminée comporte une valeur de référence respectivement définie pour chaque axe de la pluralité d'axes différents, et/ou dans lequel la valeur de référence prédéterminée est définie sur la base d'un espace entre la cuve (3) et une carrosserie (1) de la machine à laver.

10. Procédé selon l'une quelconque des revendications précédentes, dans lequel la vitesse de rotation prédéterminée est plus élevée qu'une vitesse de rotation minimale du tambour (4) à laquelle le linge adhère à une surface de paroi du tambour (4) et inférieure à une vitesse de rotation maximale du processus d'essorage.

11. Machine à laver, comportant :
une cuve (3) ;
un capteur de vibrations (77) agencé sur la cuve (3) ;
un tambour (4) configuré pour recevoir du linge dans celui-ci, et agencé de façon à pouvoir tourner dans la cuve (4) ; et
une commande (60),
**caractérisée en ce que** la commande est configurée pour :
mesurer une valeur de vibration multiaxiale de la cuve (3) en utilisant le capteur de vibrations (77) pendant une section de détection d'un processus d'essorage au cours duquel le tambour (4) tourne à une vitesse de rotation prédéterminée,
déterminer une valeur prédite de déplacement vibratoire maximal de la cuve (3) qui devrait être généré pendant le processus d'essorage sur la base de la valeur mesurée, et
déterminer s'il faut relancer le processus d'essorage après la section de détection, sur la base de la valeur prédite du déplacement vibratoire maximal et d'une valeur de référence prédéterminée.

12. Machine à laver selon la revendication 11, dans laquelle le capteur de vibrations (77) est configuré pour mesurer une pluralité de valeurs de déplacement vibratoire pour une pluralité de vibrations de la cuve (3) le long d'une pluralité d'axes différents.

13. Machine à laver selon la revendication 12, dans laquelle la commande (60) est configurée pour calculer une pluralité de valeurs de différences de phase entre la pluralité de vibrations.

14. Machine à laver selon l'une quelconque des revendications 11 à 13, dans laquelle la valeur prédite du déplacement vibratoire maximal inclut une pluralité de valeurs prédites de déplacement vibratoire maximal qui devrait être généré le long de chaque axe de la pluralité d'axes différents.

15. Machine à laver selon la revendication 14, dans laquelle la commande (60) est configurée pour faire tourner le tambour (4) plus rapidement que la vitesse de rotation prédéfinie de la section de détection lorsque toutes les valeurs de la pluralité de valeurs prédites du déplacement vibratoire maximal sont égales ou inférieures à la valeur de référence prédéterminée, et/ou
dans laquelle la commande (60) est configurée pour arrêter la rotation du tambour (4) après la section de détection lorsqu'au moins une valeur parmi la pluralité de valeurs prédites du déplacement vibratoire maximal dépasse la valeur de référence prédéterminée.
